# EUROPÄISCHE PATENTSCHRIFT

(11) **EP 3 011 277 B1**
(45) Veröffentlichungstag und Bekanntmachung des Hinweises auf die Patenterteilung: **09.11.2016**
(21) Anmeldenummer: 14733583.0
(22) Anmeldetag: 18.06.2014
(51) Int. Cl.: G01D 5/48

(54) **VORRICHTUNG ZUR DREHWINKELMESSUNG MITTELS VERÄNDERUNG UND MESSUNG DER POLARISATION VON RADIOWELLEN SOWIE VERWENDUNG DER VORRICHTUNG**
DEVICE FOR MEASURING A ROTATIONAL ANGLE BY MODIFYING AND MEASURING THE POLARIZATION OF RADIO WAVES AND USE OF SAID DEVICE
DISPOSITIF DE MESURE D'ANGLE DE ROTATION PAR VARIATION ET MESURE DE LA POLARISATION D'ONDES RADIO ET UTILISATION DU DISPOSITIF

(30) Priorität: 19.06.2013 DE 102013010164; 09.09.2013 DE 102013014789
(43) Veröffentlichungstag der Anmeldung: 27.04.2016
(73) Patentinhaber: Grau, Günter, 46282 Dorsten (DE)
(72) Erfinder: Grau, Günter, 46282 Dorsten (DE)
(74) Vertreter: Cohausz & Florack
(86) Internationale Anmeldenummer: PCT/EP2014/062811
(87) Internationale Veröffentlichungsnummer: WO 2014/202657

(56) Entgegenhaltungen:
- EP-A1- 2 597 430
- WO-A1-2012/143988
- US-A1- 2003 095 257

## Beschreibung

### Erfindungsgebiet:

Die vorliegende Erfindung betrifft Vorrichtungen zur Veränderung und Messung der Polarisation von Radiowellen sowie Anwendung auf Messung von Drehwinkeln und Verschiebungen.

### Hintergrund:

Die vorliegende Erfindung bezieht sich auf eine Vorrichtung zur Veränderung und Messung der Polarisation von Radiowellen und einen Sensor, der mechanische Drehwinkel oder Verschiebungen über die Polarisation von Radiowellen misst. Die Messung soll schnell und ohne große Latenz (in Echtzeit) erfolgen können, damit die Vorrichtung auch in Regelkreisen für schnell bewegliche Gegenstände, etwa in Servos, eingesetzt werden kann.

Mit einem geeigneten Sensor kann ein mechanischer Drehwinkel über die Messung von polarisiertem Licht erfolgen (DE 10 2005 031 966 B4). Ein derartiger Winkelsensor weist eine Reihe von positiven Eigenschaften auf, die ihn von anderen Winkelsensoren abhebt. Das auffälligste Merkmal ist die Translationsinvarianz zwischen Sensor und Signalgeber. Sie führt einerseits zu deutlichen Vereinfachungen bei der Justage und Kalibration und andererseits zu einer Unempfindlichkeit gegenüber mechanischen Vibrationen.

In bestimmten Situationen weist die Winkelmessung mit polarisiertem Licht trotz ihrer Robustheit noch einige Nachteile auf. Nachteilig ist einerseits die Verwendung von optischen Materialien als Messwertgeber. Sie sind zum Teil spröde (Glas) oder kratzempfindlich (Folien aus Kunststoff). Auf der Sensorseite ist es schwierig, Sender und Empfänger von Licht zu integrieren, da beide typischerweise aus verschiedenen Materialien hergestellt werden, obgleich es da Fortschritte (etwa OLED on Chip) gibt. Zudem ist die Lebensdauer von LED speziell bei hohen Temperaturen oder in einem korrosiven Umfeld begrenzt. Schließlich erfordert die Verwendung von Licht transparente und halbwegs saubere Oberflächen, was einerseits die verwendbaren Materialien einschränkt und andererseits den Betrieb des Sensors unter extrem rauhen Bedingungen erschwert.

Die gleichen Einschränkungen gelten für alternative optische Systeme, etwa die in EP 2 597 430 A1 und US 2003/095257 A1 beschriebenen Polarisations-Winkelsensoren.

Es wäre daher schön, die Vorteile der Polarisationsmessung beibehalten zu können, jedoch die mit Optik verbundenen Probleme zu eliminieren und den durch die LEDs und optischen Polfilter begrenzten Temperaturbereich erweitern zu können.

Polarisation ist eine wichtige Eigenschaft von allen elektromagnetischen Wellen, von Rundfunkfrequenzen bis zu optischen Frequenzen und darüber hinaus. In der Optik wird Polarisation an verschiedensten Stellen verwendet, etwa um Spiegelungen zu unterdrücken oder mechanische Spannungen sichtbar zu maschen. Auch Oberflächeneigenschaften lassen sich mit Hilfe eines Polarisationssensors untersuchen (EP 1 507 137 B1). Polarisation von Licht wird auch zur Modulation optischer Signale in der Kommunikationstechnik verwendet (CA 2 193 754C).

Im Bereich von Radiowellen (hier sind Funkfrequenzen im weitesten Sinne gemeint) wird Polarisation z.T. verwendet, um die Datenrate eines Kommunikationskanals zu erhöhen, da sich orthogonal polarisierte Wellen nicht gegenseitig beeinflussen (GB 618 615 A). Umgekehrt kann die von Antennen meist polarisiert abgestrahlte Energie zu unerwünschten Effekten führen, was man beispielsweise bei einer ungünstig ausgerichteten Radioantenne am schlechten Empfang bemerken kann.

In DE 10 2011 078 418 A1 wird eine ellipsometrische Analyse von Oberflächen mittels Millimeterwellen beschrieben, die ebenfalls auf der Auswertung von Polarisationsänderung beruht. Hierbei geht es um die Ermittlung von Rauhigkeit, Schichtdicken und anderen Parametern.

Geht man von Lichtwellenlängen zu deutlich langsameren Radiowellen über, ändern sich die Eigenschaften der Materialien für diese Wellen erheblich. Ebenso ändern sich die Komponenten für Sender und Empfänger und die Eigenschaften von Sender und Empfänger stark. So hat eine Antenne für Radiowellen nichts mit einer LED oder einer Photodiode gemein. Auf der Materialseite haben die viel größeren Wellenlängen der Radiowellen den Effekt, dass Schmutz einen viel geringeren Einfluss hat, was zu einem großen Teil am Verhältnis zwischen Wellenlänge und Größe des Gegenstandes liegt, aber auch an den Eigenschaften des Schmutzes. Während Metall und Sand für optische Frequenzen durchaus vergleichbare Eigenschaften haben, ist die Wirkung auf langwelligere Radiowellen eine gänzlich andere.

Auch in der RADAR-Technik wird Polarisation in einigen Fällen verwendet, beispielsweise um die Lage eines Gegenstandes, etwa einer verborgenen Rohrleitung, zu messen (US 4,728,897). Hier wird ausgenutzt, dass ein schwaches Echo eines verborgenen elongierten Gegenstandes sich von starken unerwünschten Echos unterscheiden lässt, wenn man eine RADAR-Messung mit verschieden polarisierten Sendesignalen wiederholt und Korrelationen bildet. Allerdings geht es in der RADAR-Technik in der Regel um die Messung von Abständen und Geschwindigkeiten, z.B. über die Messung der Laufzeit oder des Dopplereffektes. Polarisation ist hierbei eher störend, da sie die Detektierbarkeit bestimmter Gegenstände erschweren kann, da sich das RADAR-Echo eines Gegenstandes mit seiner Ausrichtung gegenüber der RADAR-Anlage ändern kann.

Der typische Anwendungsfall für RADAR ist dabei die Erfassung eines nicht zur RADAR-Anlage gehörenden bzw. unbekannten Gegenstandes. Das kann ein verborgenes Rohr sein, ein anderes Schiff oder Flugzeug, ein Auto oder ein Mensch.

Die verwendeten RADAR-Frequenzen hängen von der Anwendung ab, da z.B. die erzielbaren Reichweiten und Auflösungen sich je nach Frequenz ändern und auch der zu erwartende detektierte Gegenstand (Auto oder Mensch) sicher erfasst werden muss. Dabei waren sehr hohe Frequenzen lange Zeit nur mittels spezieller Röhren erzeugbar, später über teure Spezial-Halbleiter, aber in jüngerer Zeit auch in Silizium. Neben den außerordentlichen Fortschritten der Mikroelektronik, die konventionelle Schaltungstechnik bis in den unteren THz-Bereich ermöglichen, gibt es auch sehr geschickte Ansätze, Halbleiter wie früher Röhren zu betreiben, etwa durch Anregung von Plasmaschwingungen (Öjefors, Pfeiffer, "A 0.65 THz Focal-Plane Array in a Quarter-Micron CMOS Process Technology", IEEE JSSC Vol. 44, No. 7, July 2009). Derartige Ansätze erlauben die Erzeugung und Detektion von Radiowellen im THz-Bereich mit vergleichsweise kleinen und preiswerten Systemen und können im Idealfall monolithisch integriert werden.

Die Bestimmung von Winkeln meint bei klassischen RADAR-Anlagen einen Winkel im Raum zu einem Objekt, der entweder über eine sich drehende RADAR-Antenne, über elektronische Strahlformung mit Antennenarrays oder über Triangulation (DE 10 2008 019 621 A1) ermittelt wird. Ein Drehwinkel zu einem zuvor bestimmten Objekt kann dabei in bestimmten Fällen näherungsweise über den Vergleich unterschiedlich starker Echos mit unterschiedlicher Polarisation ermittelt werden. Dies setzt voraus, dass das Messobjekt selbst für die RADAR-Frequenz bzw. -Wellenlänge anisotrop ist. Das bedeutet, dass das Messobjekt anisotrope Strukturen aufweisen muss, die in einer gewissen Relation zur verwendeten Wellenlänge stehen. Eine ausgeprägte Anisotropie ergibt sich, wenn die Strukturen kleiner als die Wellenlänge sind, jedoch nicht so klein, dass keine Wechselwirkung mehr erfolgt. Erschwerend befindet sich das zu messende Objekt in der Regel gegenüber der RADAR-Anlage in einer beliebigen 3D-Ausrichtung, so dass eine genaue Messung von Drehwinkeln nicht erfolgen kann.
Im Fall der Rohrsuche ist es so, dass eine Winkelmessung unter bestimmten Umständen vergleichsweise genau erfolgen kann, wenn die RADAR-Anlage parallel zum Rohr gehalten wird. In diesem Fall wird bei der Messung die RADAR-Anlage bewegt und ggfs. gedreht, bis eine genaue Lokalisierung und Orientierung gefunden wurde, während das Messobjekt ruht.

Dass eine RADAR-Anlage die räumliche Orientierung eines Gegenstands messen kann, ist dabei nicht selbstverständlich. Für sehr ausgedehnte Gegenstände und hoch auflösende RADAR-Anlagen kann mittels Strahlschwenkung ein Abbild des Gegenstandes und daraus seine Orientierung ermittelt werden. Bei einer feststehenden Anlage gelingt dies normalerweise nicht. Hier kann Polarisation unter bestimmten Umständen hilfreich sein:

Für ein 10 GHz-RADAR, das mit Wellenlängen von 30cm arbeitet, ist ein Gitter aus 1cm dicken und einige 10cm langen Stäben ein guter Polarisator, der auf die Rotation des Gitters quer zum RADAR-Strahl Schließen lässt. Der Flügel eines Flugzeugs wird hingen keine so ausgeprägte Polarisationsinformation erzeugen, da ein großer Teil der Reflexion von seiner massiven Oberfläche ausgeht. Umgekehrt wirkt auch ein extrem feines optisches Polfilter nicht auf diese RADAR-Strahlung, da die winzigen, z.T. molekularen Strukturen kaum Wechselwirkung mit dieser Frequenz zeigen. Dass ein Flügel oder ein Rohr in Abhängigkeit von der Polarisation der einfallenden Strahlen unterschiedlich starke und teilweise polarisierte Echos erzeugt, ist dabei Effekten zuzuschreiben, die denen der Reflexion von Licht auf Glas ähneln (vgl. Brewster-Winkel für vollständige Polarisation der reflektierten Wellen), sowie auch linsenartigen Effekten durch oberflächlich induzierte Ströme, wobei die Struktur der Oberfläche in Verbindung mit der Stromflussrichtung (Polarisationsrichtung) Einfluss auf die "Linsencharakteristik" des Gegenstandes haben. Derartige Strukturen weisen folglich durch die makroskopische Form und Struktur ihrer Oberfläche polarisationsabhängige Eigenschaften auf, die jedoch in Abhängigkeit vom angestrahlten Ort und in Abhängigkeit vom Einfallswinkel der Radiowellen unterschiedlich sind. Dadurch ist eine halbwegs genaue Winkelmessung an derartigen Strukturen anhand von Polarisation nur unter Zuhilfenahme von Referenzmessungen und genau justierter Lage zwischen RADAR und Messobjekt möglich.

Neben der Strukturgröße von polarisationsändernden Strukturen ist bei einer RADAR-Messung auch der Mindestabstand zum zu detektierenden Gegenstand zu beachten. In zu geringer Entfernung lassen sich gesendetes und empfangenes Signal kaum voneinander unterscheiden. Zudem gibt es im Nahbereich Effekte, die als Proximityeffekt bezeichnet werden können und die weniger auf Wellenausbreitung als auf der Existenz von quasi-statischen Feldern beruhen. So wirkt ein zu nah an der Antenne befindlicher Reflektor u.U. eher wie eine kapazitive Elektrode. Echosignale im weitesten Sinn werden dabei sowohl durch kapazitive und induktive Kopplungen mit dem Reflektor als auch durch Laufzeit von Wellen, aber auch durch Resonanzeffekte und die Güte und Verstimmung des schlecht definierten Resonators bestimmt (sowohl RADAR als auch Reflektor reflektieren einen Teil des Signals, der Abstand beider zueinander bestimmt die möglichen Resonanzfrequenzen. Stehende Wellen können das gewünschte Signal stark verfälschen, insbesondere weil eine Anregung nahe der Resonanzfrequenz zu starken Phasenverschiebungen führt). Ein Messwertgeber sollte daher vorzugsweise nicht im Nahfeld der Antennen liegen.

Die Messung von Drehwinkeln etwa eines Antennenmastes mit quasi-statischen Signalen ist z.B. in GB 1 493 988 A beschrieben, wo zwei zueinander phasenverschobene Sendesignale erzeugt und durch Mischung mit dem Empfangssignal ein Mischsignal generiert wird, das zwei von der Drehfrequenz abhängige frequenzverschobene Komponenten aufweist und deren elektrische Phasenlage gegenüber den Sendesignalen vom Drehwinkel des Mastes abhängt. Diese Anordnung ist nicht geeignet, den Drehwinkel der stehenden bzw. langsam drehenden Anlage zu bestimmen, da hier die beiden Frequenz-Komponenten miteinander verschmelzen.

In DE 198 130 41 A1 wird eine Vorrichtung zur Vermessung rotierender Gegenstände beschrieben, die auf dem Dopplereffekt beruht und ein Spektrum des Echos vermisst und mit einem Referenzspektrum vergleicht, um Abnutzung eines Werkzeugs und andere Fehlerzustände zu erfassen. Dieses Verfahren ist jedoch empfindlich gegenüber Vibrationen und auch nicht geeignet, den Drehwinkel eines ruhenden Gegenstandes zu ermitteln.

In DE 101 42 449 A1 bzw. DE 101 32 685 A1 wird ein Verfahren zur Bestimmung eines Drehwinkels oder Abstandes beschrieben, das auf der Messung der Signalphase (einer Verzögerung) beruht. Auch bei diesem Verfahren wird die Auswertung der Signale durch Vibration erschwert, da eine Lageveränderung des Messwertgebers zu einer Änderung der Signalphase führt, die nicht einfach von einer Drehung des Gegenstandes unterschieden werden kann.

In DE 10 2007 045 181 A1 wird ein Rader-basierter Drehwinkelsensor beschrieben, der ähnlich einem optischen Encoder eine Codespur in Form eines sich in Bewegungsrichtung ändernden Reliefs abtastet. Auch hier sind die Position des Sensors gegenüber dem Drehgeber sowie Vibration problematisch.

In WO 2012/143988 A1 wird ein diesbezüglich robusteres Verfahren beschrieben, Allerdings für die Anwendung als linearer Positionsdetektor. Hier werden Reflektorfelder alternierender vorbestimmter Polarisationsorientierung abgetastet, wodurch bei geeigneter Auslegung eine für den Zweck ausreichende Positionierungstoleranz und eine gute Toleranz gegenüber Vibrationen erzielt wird. In Kombination mit der zuvor genannten Anordnung ergäbe sich ein robusteres abtastendes System zur Winkelmessung, das jedoch weiterhin keine weitreichende Justagefreiheit erlaubt, nicht on-axis messen kann und eine höhere Auflösung nur bei signifikantem Umfang der Encoderscheibe erzielt.

### Offenbarung der Erfindung:

Es ist eine Aufgabe der Erfindung, eine justage- und vibrationsunempfindliche Winkelmessung zu ermöglichen. Die Messung soll zudem schnell und ohne große Latenz (in Echtzeit) erfolgen können, damit sie auch in Regelkreisen mit schnell bewegten Gegenständen eingesetzt werden kann, wo überwiegend optische und magnetische Verfahren zum Einsatz kommen.

Die zuvor hergeleitete und aufgezeigte Aufgabe wird gemäß einer ersten Lehre der vorliegenden Erfindung durch eine Vorrichtung zur Messung von Drehwinkel oder Drehgeschwindigkeit gelöst, mit mindestens einem Sender (100) von Radiowellen (102), also einem zum Senden von Radiowellen konfigurierten (ausgestalteten) Sender mit Antenne (101), mit mindestens zwei Empfängern (106) für Radiowellen, also zum Empfangen von Radiowellen konfigurierten (ausgestalteten) Empfängern mit Antennen (104,105), mit einem für die vom Sender ausgehenden Radiowellen anisotropen Messwertgeber (103), wobei der anisotrope Messwertgeber gegenüber den Empfängern um eine Drehachse drehbar ist, wobei die Empfänger polarisationsempfindlich sind, wobei die vom Sender ausgehenden Radiowellen durch den anisotropen Messwertgeber veränder werden und die veränderten Radiowellen von den polarisationsempfindlichen Empfängern empfang werden, wobei Einrichtungen vorgesehen sind, die konfiguriert sind, aus den Signalen der polarisationsempfindlichen Empfänger (104,105,106) eine Aussage über die Polarisation der empfangenen Radiowellen zu treffen.

Die zuvor hergeleitete und aufgezeigte Aufgabe wird gemäß einer weiteren Lehre der vorliegenden Erfindung gelöst durch ein Verfahren zur Veränderung und Messung der Polarisation von Radiowellen, insbesondere unter Verwendung der erfindungsgemäßen Vorrichtung mit mindestens einem Sender von Radiowellen, also einem zum Senden von Radiowellen konfigurierten (ausgestalteten) Sender, mit mindestens zwei Empfängern für Radiowellen, also zum Empfangen von Radiowellen konfigurierten (ausgestalteten) Empfängern, mit einem für die vom Sender ausgehenden Radiowellen anisotropen Messwertgeber, wobei der anisotrope Messwertgeber gegenüber den Empfängern um eine Drehachse drehbar ist, wobei die Empfänger polarisationsempfindlich sind, wobei die vom Sender ausgehenden Radiowellen durch den anisotropen Messwertgeber verändert werden und die veränderten Radiowellen von den polarisationsempfindlichen Empfängern empfangen werden.

Wie oben beschrieben taugt die von makroskopischen Strukturen erzeugte Polarisationsabhängigkeit nicht zur lageunabhängigen und justagefreien Messung des Polarisationswinkels der empfangenen Radiowellen. Ein räumlich ausgedehntes Polarisationsfilter hingegen zeichnet sich dadurch aus, dass es unabhängig vom Ort dieselben Polarisationseigenschaften aufweist, es ist anisotrop. Anisotrop bedeutet, dass es für die verwendeten Radiowellen makroskopisch unstrukturiert erscheint, jedoch richtungsabhängige Eigenschaften aufweist. Im optischen Bereich sind gestreckte iodierte Polymerfolien (Polaroidfolien) Beispiele für anisotrope Materialien mit polarisierenden Eigenschaften. Im Bereich von Radiowellen ist ein mögliches Gegenstück zu den Polaroidfolien ein Drahtgitter, dessen Gitterkonstante kleiner als die verwendete Wellenlänge ist. Gitterkonstanten oberhalb der Wellenlänge führen zu Beugungseffekten, d.h. wellenlängen- und winkelabhängige Effekte treten ebenso in Erscheinung wie Interferenzen (vgl. Doppelspalt-Experiment). Im Nahbereich bzw. bei stark fokussierten Radiowellen beginnen bei Strukturen in der Größenordnung der halben Wellenlänge unerwünschte ortsabhängige Effekte (vgl. Rayleigh-Kriterium und Abbe'sches Abbildungslimit).

Mit anderen Worten wird die Polarisationseigenschaft eines ausgedehnten Drahtgitter-Polfilters (als beispielhafte Realisierung des anisotropen Messwertgebers) unabhängig vom Einfallswinkel und vom Ort der Bestrahlung, wenn seine Gitterkonstante kleiner als die verwendete Wellenlänge ist, er also anisotrop ist, und die Messung der Polarisationsrichtung wird unabhängig vom Ort der Messung auf dem Messwertgeber, solange die vom Sender ausgehenden und vom Empfänger empfangenen Radiowellen durch das ansonsten homogene Polfilter fallen bzw. von diesem reflektiert werden, was durch ausreichend große Dimensionen des Drahtgitters sichergestellt werden kann.

Polfilter mit Gitterkonstanten in der Größenordnung der Wellenlänge oder knapp darüber könnten noch eingeschränkt verwendet werden, wenn durch eine hinreichend großflächige Bestrahlung die räumliche Auflösung maskiert werden kann. Allerdings treten dann bereits weitere unerwünschte Effekte in Erscheinung, während die Polarisationseigenschaften schlecht sind, so dass "echte" Polfilter mit Strukturgrößen unterhalb der Wellenlänge vorzuziehen sind.

Ausgestaltungen der Vorrichtung und des Verfahrens sind Gegenstand der Unteransprüche und werden im Folgenden beschrieben.

Grundsätzlich kann bereits mit nur einem Empfänger auf die Polarisationsrichtung der empfangenen Radiowelle geschlossen werden, entweder durch einen veränderlichen Winkel zwischen linear polarisiertem Sender und linear polarisiertem Empfänger oder mit Hilfe eines zwischengeschalteten Messwertgebers. Bei dieser Anordnung ist es jedoch schwierig, zwischen Nutz- und Störsignal zu unterscheiden, weil etwa eine Änderung der Sendeleistung, eine sich ändernde Übertragungseffizienz oder Empfängerempfindlichkeit nur mit großem Aufwand ermittelt werden können. Insbesondere bei kurzzeitigen Störungen, wie sie etwa durch Vibration hervorgerufen werden, ist eine solche Messung unzuverlässig. Daher werden besser mindestens zwei Empfänger für verschiedene Polarisationsrichtungen eingesetzt, die durch Relativmessung der empfangenen Signale einen Großteil von Fehlerquellen eliminieren. Aufgrund der 180°-Periodizität der Polarisation sind N unterschiedlich orientierte Empfänger im Idealfall auf 180°/N verschiedene Winkel eingestellt.
Mit anderen Worten werden, damit zeitliche Schwankungen in den Signalen nicht zu Messfehlern führen, die Signale der Empfänger gleichzeitig oder wenigstens fast gleichzeitig gemessen, so dass etwa bei der Berechnung des Arcustangens die absolute Amplitude der Signale nicht zum Ergebnis beiträgt. Da aus jeder Messung der momentanen Amplituden unmittelbar der momentane Winkel des Messwertgebers bestimmt werden kann, sind sehr hohe Messraten bzw. Drehzahlen möglich.

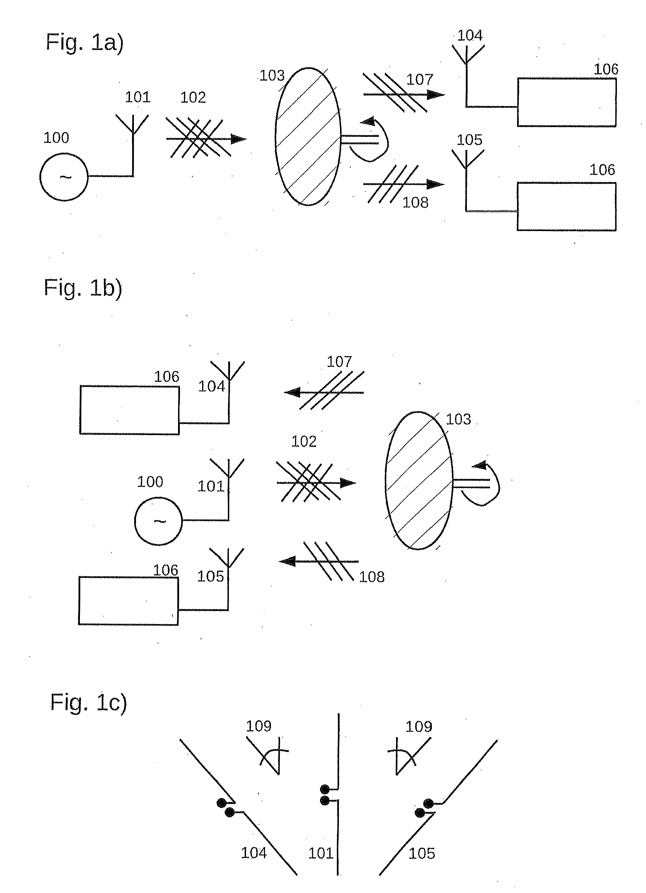

Wie in Fig. 1a und Fig. 1b gezeigt gibt es prinzipiell zwei Anordnungen, um die vom anisotropen Messwertgeber veränderten Radiowellen zu empfangen. In Fig. 1 wird derjenige Teil der vom aus Generator (100) und Antenne (101) bestehenden Sender gesendeten Radiowellen (102) von den aus Antennen (104,105) und Verstärker und sonstiger Signalaufbereitung bestehenden Empfängern (106) ausgewertet, der den anisotropen Messwertgeber (103) durchdringen kann. In diesem transmissiven Fall kann der anisotrope Messwertgeber (103) beispielsweise aus parallelen Metallstäben bestehen. Es ist jedoch ebenfalls möglich, ihn aus Dielektrika, vorzugsweise solchen mit hoher dielektrischer Konstanten für die verwendeten Radiowellen, zu realisieren (z.B. Aluminiumoxidkeramik). So sind dielektrische Stäbe ebenso wie ein massives Material mit geeignetem Profil, etwa parallelen eingeprägten Rillen, verwendbar.

Der Begriff Sender umfasst hier allgemein mindestens die Komponenten Generator (100) und Antenne (101). Entsprechend besteht ein Empfänger aus Antenne (104 oder 105 je nach Orientierung), Verstärker und Auswerteschaltung (106). Aufgrund der geringen benötigten Sendeleistungen ist es möglich, die Antennen als Bestandteil von Sender und Empfänger auszulegen. So kann etwa die senderseitige Antenne als frequenzselektive Komponente Bestandteil des Generators sein. In diesem Fall verschmelzen Generator (100) und Antenne (101) zu einer Komponente. In gleicher Weise können beispielsweise bei einem super-regenerativen Empfänger die Komponenten Antenne (104 oder 105) und Verstärker- bzw. Auswerteschaltung (106) zu einer Einheit verschmelzen.
Im Extremfall kann die Elektronik für Sender und Empfänger gemeinsam genutzte Komponenten aufweisen. So ist es möglich, die Einheit aus Generator (100) mit Antenne (101) durch unterschiedliches Biasing und/oder variable Schaltungskomponenten in eine Art von super-regenerativen Empfänger aus Antenne (104) und Verstärker (105) umzukonfigurieren, wobei Sendeantenne (101) und Empfangsantenne (104) vorzugsweise identisch sind (Sende-Empfänger). Für eine relative Messung der Empfangsstärke unterschiedlicher Polarisation würden in diesem Fall vorzugsweise mindestens zwei solcher Sende-Empfänger mit unterschiedlich ausgerichteten polarisierten Antennen verwendet, bevorzugt vier oder acht.

In Fig. 1b muss der Messwertgeber (103) nicht zwingend durchlässig sein, da eine von der Polarisation abweichende Reflexion gemessen wird. Hier kann etwa ein Höhenprofil in einem massiven Metallblock zur Erzeugung der Anisotropie verwendet werden.

Ist der Messwertgeber hinreichend groß, kann eine laterale Translation zwischen Messwertgeber und Sender/Empfänger in allen drei Achsen toleriert werden. Dadurch wird die Vorrichtung unempfindlich gegenüber Justagefehlern und Vibration.

Trotz des höheren Schaltungsaufwandes kann die Verwendung von Empfängern für mehr als zwei unterschiedliche Polarisationswinkel sinnvoll sein, um die Robustheit der Signalauswertung zu verbessern. Besonders vorteilhaft sind Anordnungen mit N=4 oder N=8 Ausrichtungen, die um 180°/N verschieden orientiert sind.

In Fig. 1a und Fig. 1b sind jeweils nur ein Sender bzw. eine Sendeantenne gezeigt. Je nach Anwendung kann es sinnvoll sein, mehrere räumlich verschobene Antennen von einem Sender zu speisen oder gar mehrere Sender mit mehreren Antennen (101) zu verwenden, um eine erhöhte Fehlertoleranz zu erzielen und eine gleichmäßigere Ausleuchtung des Messwertgebers (103) mit Radiowellen zu erzielen. Mit dem gleichen Argument sind ggfs. mehrere parallele Empfangsantennen (104 und 105) mit gemeinsamen oder separaten Empfängern sinnvoll. Aufgrund der Translationsinvarianz des empfangenen Signals können die Messergebnisse parallel arbeitender Empfänger sehr einfach kombiniert werden.

Die räumliche Anordnung von Sende- und Empfangsantennen kann variieren. Es ist jedoch zweckmäßig, ein im Mittel über alle Drehwinkel gleichmäßig starkes Empfangssignal an allen Empfängern zu erhalten, was beispielsweise bei einer zentral angeordneten Sendeantenne und radial um diese herum angeordnete Empfangsantennen in gleichem Abstand zur Sendeantenne bewerkstelligt werden kann. Analog können alle Empfangsantennen dicht gepackt werden und mehrere Sendeantennen bilden einen Kreis um die Empfangsantennen. Andere Anordnungen, auch solche mit systematisch unterschiedlich starken Empfangssignalen, sind ebenfalls verwendbar, da systematische Fehler in der Signalauswertung kompensiert werden können.

Der Messwertgeber (103) muss die Radiowellen nicht vollständig polarisieren. Wesentlich ist, dass ein zur Messung ausreichender Teil der Radiowellen polarisiert wird. Unpolarisierte bzw. in der Polarisation unmodifizierte Radiowellen müssen bei der Auswertung der empfangenen Signale eliminiert bzw. berücksichtigt werden.

Der Abstand zwischen Messwertgeber (103) und Sende- bzw. Empfangsantennen (104,105) kann variieren, solange sichergestellt ist, dass der Großteil des empfangenen Signals dem Echo des Messwertgebers (103) zugeordnet werden kann, d.h. mit größer werdendem Abstand und bei nur mäßiger Fokussierung der vom Sender abgestrahlten Radiowellen wird man den Messwertgeber (103) größer auslegen. Vorzugsweise wird der Abstand so groß gewählt, dass das Nahfeld der Antennen nicht durch den Drehgeber gestört wird.

Die Ausgestaltung der Signalauswertung oder deren Umwandlung in übliche Ausgabeformate ist nicht Gegenstand der Erfindung, da die resultierenden relativen Amplituden sich in ihrem Wesen nicht von den Signalen eines magnetischen Resolvers unterscheiden und -nach Elimination der Trägerfrequenz ebenfalls Ähnlichkeit mit den Signalen aus optischen und magnetischen Sensorsystemen aufweisen. Demzufolge können Standardkomponenten, z.B. sogenannte Interpolatoren, zur Umwandlung der gemessenen Rohdaten in Winkelgrößen verschiedener Formate verwendet werden. Zur Physik der empfangenen Signale sei auf das Malus-Gesetz verwiesen, das auch Grundlage des optischen Polarisationssensors gemäß DE 10 2005 031 966 B4 ist. Das Malus-Gesetz bedingt eine elektrische 360°-Periode bei einer mechanischen 180°-Drehung.

Die Verwendung höchster Frequenzen ist hinsichtlich der möglichen Miniaturisierung zweckmäßig, jedoch nicht zwingend erforderlich. Da für die Anwendung des RADAR-Systems als Winkelmesser kein extrem großer Dynamikbereich erforderlich ist (anders als beim Abstandsradar), kann einerseits mit sehr niedrigen Sendeleistungen gearbeitet werden, andererseits können auch schlechte Antennen (z.B. elektrisch stark verkürzte Antennen oder Antennen auf stark verlustbehafteten Substraten) verwendet werden, so dass einerseits der für einen kompakten Aufbau (z.B. vergleichbar einem konventionellen optischen Encoder) nutzbare Frequenzbereich nach unten hin erweitert werden kann, andererseits auch preiswerte Materialien wie FR4 verwendet werden können. Dies eröffnet einerseits mehr Freiheiten in der Wahl der Fertigungstechnologien und Komponentenauswahl, andererseits auch Freiheiten in der Wahl einer zweckmäßigen Frequenz für Messungen in bestimmten Medien (etwa in einer Pumpe). So wird man je nach zu überbrückender Distanz nicht unbedingt im Absorptionsmaximum des Mediums arbeiten wollen, könnte aber durchaus eine signifikante Absorption zur Unterdrückung von störenden Mehrfachreflexionen ausnutzen.

Ist der Messwertgeber (103) räumlich periodisch strukturiert, ist die Messung im Wesentlichen nur auf die Drehung des Messwertgebers empfindlich, nicht jedoch gegen seitliche Lageveränderungen. Dies ist für die Anwendung als Winkelmesser von großem Vorteil. Eine lateral unterschiedliche Gestaltung des Messwertgebers (103) erlaubt jedoch auch die Messung von seitlichen Verschiebungen gegenüber dem Sender/den Empfängern, wofür RADAR-Systeme normalerweise unempfindlich sind, da sich Laufzeit und Amplitude des Echos dabei nicht unbedingt ändern.

In diesem Fall wird die Anisotropie des Messwertgebers (500) im makroskopischen Maßstab verändert, z.B. mit einer Periode pro Zentimeter. Während es relativ schwierig ist, die molekulare Orientierung über einen makroskopisch großen Bereich wunschgemäß zu manipulieren, ist dies durch mechanische Bearbeitung der Komponenten für Radiowellen vergleichsweise einfach. So kann z.B. der Polarisationswinkel makroskopisch entlang einer Dimension variiert werden, was bei Verschiebung des Filters gegenüber dem Sender ebenfalls zu einer Änderung des gemessenen Polarisationswinkels führt. Besonders zweckmäßig ist dies, wenn diese Polfilterstruktur geeignet auf dem Umfang eines rotierenden Gegenstandes (503) angebracht ist, da man so ein drehwinkelunabhängiges, aber dafür in Achsrichtung lageabhängiges Signal messen kann.

Durch Verwendung von Antennenschaltern könnte die Messung an unterschiedlichen Antennen auch mit einem einzigen Empfänger geschehen. Nachteilig ist in diesem Fall die Zeitdifferenz bei der Messung, die etwa im Fall von Vibrationen zu Meßfehlern führen kann.

Mit anderen Worten hebelt die zeitlich nacheinander liegende Messung der Signale verschiedener Empfänger den Vorteil der Relativmessung aus, sofern der zeitliche Abstand der Messungen nicht sehr klein gegenüber Signaländerungen aus Vibration oder der zu messenden Bewegung ist. Die zeitgleiche Messung aller Empfangssignale ist daher vorteilhaft.
Entsprechend kann unter bestimmten Umständen, insbesondere großen Abständen zum Messwertgeber (103), auch eine gemeinsame Antenne für Sender und Empfänger verwendet werden, was ggfs. einen Antennenschalter erfordert. Die Abklingzeit des Senders ist in diesem Fall ebenso eine limitierende Größe wie die mögliche Übersteuerung des Empfängers. Gleichwohl sind derartige Konfigurationen möglich und im Sinne der vorliegenden Erfindung.

Gemäß einer Ausgestaltung der erfindungsgemäßen Vorrichtung zur Veränderung und Messung der Polarisation von Radiowellen sind die vom Sender ausgehenden Radiowellen linear polarisiert.

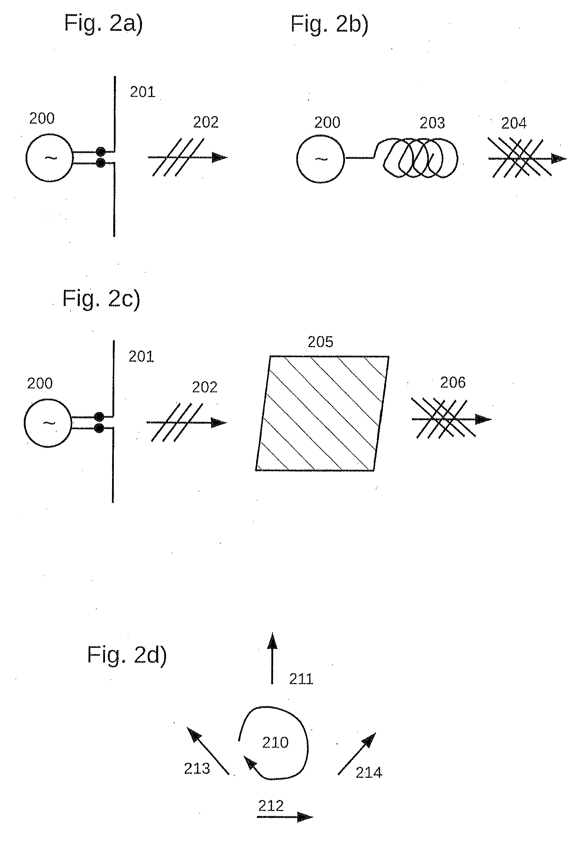

Fig. 2a zeigt symbolisch die Kombination eines Generators (200) und eines Dipols (201) als Antenne für linear polarisierte Strahlung (202). In dieser Konfiguration ist es vorteilhaft, Empfänger für zwei Polarisationsrichtungen zu verwenden, die um ±45° gegenüber der Orientierung der Sendeantenne verdreht sind, oder vier Empfänger mit ±22.5° und ±45° Drehung (211-214) gegenüber der Sendeantenne (210).
Bei ausreichend großer Fläche können mehrere Sender an verschiedenen Stellen unterschiedlich polarisierte Radiowellen ausstrahlen, die von verschiedenen Empfängern empfangen werden, oder es werden in zeitlicher Abfolge Radiowellen unterschiedlicher Polarisation an gleicher Stelle ausgestrahlt und von denselben Empfängern empfangen. Die N unterschiedlich orientierten Sendesignale haben dabei vorzugsweise 180°/N unterschiedliche Ausrichtung. Dieser zusätzliche Aufwand kann zu einem deutlich besseren Messergebnis beitragen, da das Echo bei orthogonaler Ausrichtung zwischen Sendeantenne und Messwertgeber sehr klein werden kann und die Qualität des gemessenen Signals vom Winkel abhängt.

Gemäß einer weiteren Ausgestaltung der erfindungsgemäßen Vorrichtung zur Veränderung und Messung der Polarisation von Radiowellen sind die vom Sender ausgehenden Radiowellen im zeitlichen Mittel unpolarisiert oder zirkular polarisiert. Die Erzeugung unpolarisierter Strahlung ist im Radiofrequenzbereich deutlich schwieriger zu realisieren als bei Licht. Das liegt daran, dass im Radiobereich die Antenne eine ähnliche Größenordnung hat wie die Wellenlänge der abgestrahlten Radiowelle und ggfs. nur eine einzige Antenne vorhanden ist. Im Vergleich dazu ist die Ausdehnung einer LED ungleich größer als die Lichtwellenlänge und die LED emittiert spontan Licht aus verschiedenen Bereichen des Kristallvolumens mit unkontrollierter Orientierung. Unpolarisierte (d.h. zeitlich randomisiert linear polarisierte) Radiowellen zu erzeugen erfordert einigen Aufwand.
Eine einfachere Lösung liegt bei Radiowellen darin, zirkular polarisierte Radiowellen (204,206) zu erzeugen. Die in Fig. 2b gezeigte Helixantenne (203) ist eine mögliche Bauform, die jedoch nicht besonders kompakt ist. Fig. 2c zeigt eine Variante, die deutlich flacher gebaut und insbesondere integriert werden kann. Hier wird eine linear polarisierte Antenne (201) mit einem Verzögerungselement (205) versehen. Andere Antennenbauformen sind möglich.

Da bei zirkularer Polarisation im zeitlichen Mittel alle linearen Polarisationsrichtungen vom Sender abgestrahlt werden, ist auch das vom Messwertgeber reflektierte Signal über der Zeit für alle Drehwinkel des Messwertgebers gleich stark, so dass die Messung robuster ist. Eine gewisse Abweichung zu elliptischer Polarisation kann dabei toleriert werden, erfordert aber ggfs. eine Korrektur der Messwerte. Besonders im Fall zirkularer Polarisation der gesendeten Radiowellen kann der anisotrope Messwertgeber auch aus einer Verzögerungsplatte bestehen. In diesem Fall können auch die Empfänger bzw. Empfangsantennen zur Detektion insbesondere zirkularer Radiowellen ausgebildet sein.

Gemäß einer Ausgestaltung der erfindungsgemäßen Vorrichtung zur Veränderung und Messung der Polarisation von Radiowellen ist die Vorrichtung durch ein Gehäuse teilweise oder ganz abgeschirmt.

Die Abschirmung (300,301) dient einerseits der mechanischen Fixierung der Komponenten der Vorrichtung, andererseits aber auch der Abschirmung gegen äußere Störungen sowie Unterdrückung von Abstrahlung nach außen.

Sofern der Messwertgeber keine bauliche Einheit mit den übrigen Komponenten darstellt, ist u.U. kein geschlossenes Gehäuse im Sinne von Abschirmung von Radiowellen möglich bzw. erwünscht. Für den nicht drehenden Teil ist aber dennoch z.B. ein hermetisch dichtes Gehäuse realisierbar, das z.B. aus Keramik bestehen kann, die für die verwendeten Radiowellen durchlässig ist. Ein solches Gehäuse bietet Schutz gegen Schmutz, Korrosion und mechanische Beschädigung.

Gemäß einer weiteren Ausgestaltung der erfindungsgemäßen Vorrichtung zur Veränderung und Messung der Polarisation von Radiowellen enthält die Vorrichtung absorbierendes Material.

Zur Vermeidung von Abstrahlung von Radiowellen nach außen sowie zur Reduktion von Messfehlern können die Umgebung des Sensors, Bereiche zwischen den Antennen sowie Teile des Messwertgebers sowie Teile des Gehäuses mit absorbierendem Material (302) versehen werden.

Gemäß einer weiteren Ausgestaltung der erfindungsgemäßen Vorrichtung zur Veränderung und Messung der Polarisation von Radiowellen enthält die Vorrichtung absorbierende Strukturelemente.

Durch Ausnutzung von geometrischen Formen, z.B. Waben oder Poren, kann die Absorption von Radiowellen noch verstärkt werden, so dass stellenweise keine speziell absorbierenden Materialien für die Strukturelemente (302) notwendig sind.

Gemäß einer weiteren Ausgestaltung der erfindungsgemäßen Vorrichtung zur Veränderung und Messung der Polarisation von Radiowellen ist der anisotrope Messwertgeber für die vom Sender gesendeten Radiowellen für unterschiedliche Polarisation unterschiedlich durchlässig und die polarisationsempfindlichen Empfänger empfangen die vom anisotropen Messwertgeber durchgelassenen Radiowellen.
Hier sind Konstruktionen aus parallelen Gitterstäben, aus einem Vollmaterial gefräste Langlöcher, anisotrope Strukturen auf einer gedruckten Schaltung bzw. Leiterplatte und vieles mehr vorstellbar. Neben leitfähigen Materialien wie Metall kommen auch Dielektrika mit für die verwendete Frequenz ausreichend hoher dielektrischer Konstante in Frage.

Gemäß einer weiteren Ausgestaltung der erfindungsgemäßen Vorrichtung zur Veränderung und Messung der Polarisation von Radiowellen reflektiert der anisotrope Messwertgeber die vom Sender gesendeten Radiowellen für unterschiedliche Polarisation unterschiedlich stark und die polarisationsempfindlichen Empfänger empfangen die vom anisotropen Messwertgeber reflektierten Radiowellen.
Neben den oben genannten durchlässigen Strukturen, die ebenfalls einen Teil der Radiowellen reflektieren, können nicht durchlässige Strukturen realisiert werden. Hier bieten sich z.B. in Metall gefräste, gegossene oder tiefgezogene Muster an, deren Relieftiefe auf die Wellenlänge der Radiowellen abgestimmt sein sollten. Neben leitfähigen Materialien wie Metall kommen auch Dielektrika mit für die verwendete Frequenz ausreichend hoher dielektrischer Konstante in Frage. Ein unterschiedlich starkes Empfangssignal kann dabei auch durch einen polarisationsabhängigen Reflexionswinkel oder einen polarisationsabhängigen Streuwinkel erzeugt werden.

Gemäß einer Ausgestaltung der erfindungsgemäßen Vorrichtung zur Veränderung und Messung der Polarisation von Radiowellen besteht der anisotrope Messwertgeber aus nur einem Material. Für Anwendungsfälle, in denen der Messwertgeber extremen Belastungen ausgesetzt ist, beispielsweise großer Hitze und Temperaturzyklen, Korrosion oder starker Vibration, ist eine Realisierung des Messwertgebers aus nur einem Material, insbesondere aus einem massiven Materialstück, vorteilhaft.

Gemäß einer weiteren Ausgestaltung der erfindungsgemäßen Vorrichtung zur Veränderung und Messung der Polarisation von Radiowellen besteht der anisotrope Messwertgeber aus verschiedenen Materialien.

Zur Verbesserung bestimmter Eigenschaften kann ein Messwertgeber aus verschiedenen Materialien vorteilhaft sein. So ist ein Messwertgeber als gedruckte Schaltung leichter und preiswerter als einer aus massivem Material. Die Kombination von Metall und z.B. Leitgummi als Absorber kann ebenfalls dienlich sein, störende Mehrfachreflexionen zu reduzieren. Eine mehrlagige Anordnung von anisotropen Strukturen zu einem dreidimensionalen Gitter kann ebenfalls zur Verbesserung der anisotropen Eigenschaften verwendet werden. Dazu können beispielsweise auch mehrlagige gedruckte Schaltungen verwendet werden.

Gemäß einer Ausgestaltung der erfindungsgemäßen Vorrichtung zur Veränderung und Messung der Polarisation von Radiowellen ist die Vorrichtung zu einer baulichen Einheit zusammengefasst.

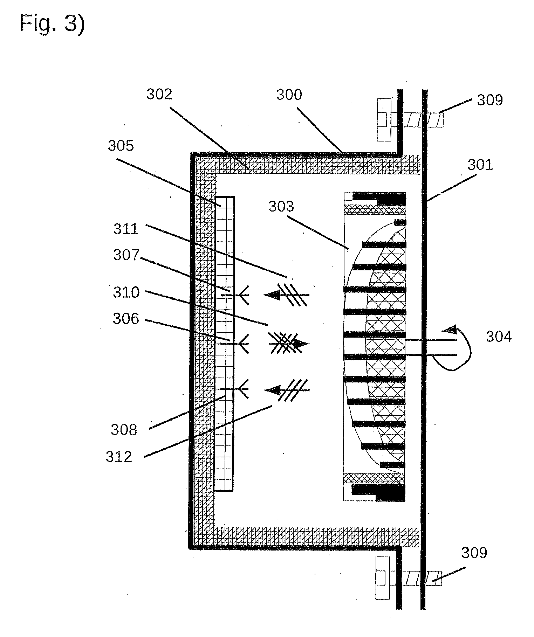

Hier kann das Gehäuse (300,301) in Fig. 3 ggfs. mit einem Lager (nicht gezeigt) und einer Welle (304) versehen sein, so dass der Messwertgeber (303) sich immer im Inneren des geschlossenen Gehäuses befindet. Alternativ kann das Gehäuse zu Montagezwecken geöffnet und z.B. der rechte Teil (301) an einer anderen Apparatur montiert werden. Die Ausführungsbeispiele gehen näher darauf ein.

Gemäß einer Ausgestaltung der erfindungsgemäßen Vorrichtung zur Veränderung und Messung der Polarisation von Radiowellen ist der anisotrope Messwertgeber von der übrigen Vorrichtung baulich getrennt.

Wird die erfindungsgemäße Vorrichtung an einer anderen Vorrichtung montiert, die bereits ein Gehäuse hat, so kann der linke Gehäuseteil (300) in Fig. 3 am Gehäuse (301) der anderen Apparatur befestigt werden.

Es sind auch Anwendungen denkbar, bei denen keine direkte mechanische Verbindung zwischen (300) und (301) besteht bzw. das Teil (301) gar nicht existiert. Die Anwendungsbeispiele gehen näher darauf ein.

Gemäß einer Ausgestaltung der erfindungsgemäßen Vorrichtung zur Veränderung und Messung der Polarisation von Radiowellen sind Einrichtungen vorgesehen, die konfiguriert sind, aus den Signalen der polarisationsempfindlichen Empfänger eine Aussage über die Polarisation der empfangenen Radiowellen zu treffen.

Ziel ist es, einen kompakten Sensor zu schaffen, der die gewonnenen Rohdaten geeignet aufbereitet, den Winkel der empfangenen Radiowellen bestimmt und in einer applikationsspezifischen Weise aufbereitet zur Verfügung stellt. So ist beispielsweise eine Konvertierung des gemessenen Winkels in ein differentielles bandbegrenztes Signal vorteilhaft, da es besonders störsicher übertragen und ausgewertet werden kann.

Gemäß einer Ausgestaltung der erfindungsgemäßen Vorrichtung zur Veränderung und Messung der Polarisation von Radiowellen sind Mittel zur Kalibration vorgesehen.

Mechanische, konstruktive und elektronische Fehler können das Messergebnis ebenso verfälschen wie störende externe Einflüsse. Die Korrektur bzw. Kompensation derartiger Störungen wird im Idealfall autonom von der Vorrichtung vorgenommen, ggfs. nach vorheriger werksseitiger Voreinstellung.

Gemäß einer Ausgestaltung der erfindungsgemäßen Vorrichtung zur Veränderung und Messung der Polarisation von Radiowellen sind Sender und Empfänger von Radiowellen integriert.
Etwa im Frequenzbereich ab 50GHz werden die Wellenlängen und demzufolge die Größen von Antennenstrukturen so klein, dass sie entweder Bestandteil des Package einer integrierten Schaltung werden oder gleich auf einen Mikrochip integriert werden können.

Neben Kosteneinsparungen und weiterer Verkleinerung ist hier als größter Vorteil die sehr gute Präzision der relativen Winkel zwischen den verschiedenen Antennen zu nennen, die sich positiv auf die Messgenauigkeit auswirkt.

Ferner erlaubt die höhere Integration die Verwendung noch höherer Frequenzen, da störende Interfaces (Leitungen, Stecker) entfallen. Hier ist insbesondere die Möglichkeit hervorzuheben, im THz-Bereich zu arbeiten, was eine sehr kleine Baugröße der Vorrichtung erlaubt. Die Integration von Sendern und Empfängern auf demselben Chip erlaubt ferner ein besonders gutes Matching, da sich Schaltungsparameter und Temperatur gleichermaßen für alle Komponenten ändern. Zudem sinken mit zunehmender Frequenz die Abstände, ab denen man sich nicht mehr im von störenden Effekten geprägten Nahfeld der Antennen bewegt.

Gemäß einer Ausgestaltung der erfindungsgemäßen Vorrichtung zur Veränderung und Messung der Polarisation von Radiowellen sind Sender und Empfänger zusammen mit Einrichtungen zur Ansteuerung eines Aktuators und zum Vergleich der gemessenen Polarisation der empfangenen Radiowellen mit einer Sollgröße zusammenwirkend angeordnet.

Ähnlich einer Servo-Applikation sind auch bei Antrieben "integrierte" Lösungen erwünscht, bei denen Antrieb, Ansteuerung und Sensorik zusammengefasst werden. Mit der Möglichkeit, die Vorrichtung in einer Silizium-Technologie monolithisch zu integrieren eröffnet sich die Möglichkeit, RADAR-Sensorik und THz-Sensorik mit speziellen anderen Schaltungselementen zu kombinieren.

Gemäß einer Ausgestaltung der erfindungsgemäßen Vorrichtung zur Veränderung und Messung der Polarisation von Radiowellen sendet der Sender Radiowellen zeitkontinuierlich.

Wenn die Empfänger z.B. nur die Polarisationsrichtung des empfangenen Signals ermitteln, genügt prinzipiell eine einfache Amplitudenmessung, bei der Sender und Empfänger zeitkontinuierlich arbeiten und die gleichgerichteten Signale der Empfänger ausgewertet werden. Diese Lösung funktioniert dann besonders gut, wenn Mehrfachreflektionen wirksam unterdrückt werden können. Die Komplexität der Schaltung und der Stromverbrauch sind hier minimal. Eine zeitweise Abschaltung von Sender und Empfänger zur Reduktion der Stromaufnahme sind hierbei natürlich auch möglich.

Gemäß einer Ausgestaltung der erfindungsgemäßen Vorrichtung zur Veränderung und Messung der Polarisation von Radiowellen sendet der Sender Radiowellen in Intervallen.

Gemäß einer Ausgestaltung der erfindungsgemäßen Vorrichtung zur Veränderung und Messung der Polarisation von Radiowellen werden von den Empfängern empfangenen Radiowellen in kurzen Zeitintervallen ausgewertet, die mit den Intervallen des Senders korreliert sind.

Wenn Mehrfachreflexionen nur schlecht unterdrückt werden können (z.B. wenn starke mechanische Vibrationen auftreten), kann die Polarisationsmessung in einem Intervall erfolgen, in dem nur das gewünschte Nutzsignal erwartet wird. Die Sendepausen dienen hier dem Abklingen der Mehrfachreflexionen. In gleicher Weise kann der Sensor natürlich auch zur Reduktion der Stromaufnahme Sendepausen einlegen.

Gemäß einer Ausgestaltung der erfindungsgemäßen Vorrichtung zur Veränderung und Messung der Polarisation von Radiowellen sind die vom Sender ausgesendeten Radiowellen moduliert. Wenn der Sender zeitkontinuierlich sendet, besteht die Möglichkeit, dass sich Stehwellen ausbilden, die zu winkelabhängigen Messfehlern führen können. Diese sind nicht stabil gegenüber Vibration oder anderen mechanischen Veränderungen. Derartige Effekte sind ebenfalls frequenzabhängig. Eine Modulation der gesendeten Radiowellen z.B. in der Frequenz und eine zeitlich gemittelte Auswertung über mindestens eine Periode eines Modulationssignals kann solche Effekte reduzieren. Eine Frequenz- oder andere Modulation kann dabei auf vielerlei Weise geschehen, beispielsweise durch einen rampenförmigen Frequenz-Sweep, wie er bei einem FMCW-Radar üblicherweise zur Abstandsmessung verwendet wird.

Gemäß einer Ausgestaltung der erfindungsgemäßen Vorrichtung zur Veränderung und Messung der Polarisation von Radiowellen werden von den Empfängern empfangenen Radiowellen zeitkontinuierlich ausgewertet.

Gemäß einer Ausgestaltung der erfindungsgemäßen Vorrichtung zur Veränderung und Messung der Polarisation von Radiowellen werden von den Empfängern der Radiowellen nur Amplituden ausgewertet.

Bei geringen Anforderungen an die Messgenauigkeit kann schon ein einfacher Diodendetektor als Empfänger verwendet werden. Eine Kalibration kann dabei z.B. nach erfolgter AD-Wandlung erfolgen. Weiterhin können Temperatur- und Offsetgrößen durch eine alternierende Messung mit und ohne Sendesignal erfolgen. Der Sender wird hierbei z.B. in so langsamer Folge an- und abgeschaltet, dass der Empfänger auf den jeweils statischen Messwert einschwingen kann, während diese Alternierung schnell genug ist, dass sich die Ausrichtung des anisotropen Messwertgebers in dieser Zeit praktisch nicht ändert.

Gemäß einer weiteren Ausgestaltung der erfindungsgemäßen Vorrichtung zur Veränderung und Messung der Polarisation von Radiowellen werden von den Empfängern der Radiowellen Amplituden- und Zeitinformationen ausgewertet. Neben der Messung von Polarisation und der Unterdrückung von Störsignalen durch z.B. Mehrfachreflexionen können die Empfänger Zeitinformationen auch hinsichtlich z.B. der Laufzeit der Radiowellen auswerten, die z.B. mit dem Abstand oder der Menge durchdrungenen Materials korrelieren. Eine Abstandsmessung kann beispielsweise durch Laufzeitmessung (TOF-RADAR), durch Frequenzmodulation des Sendesignals und Vergleich mit dem Empfangssignal (FMCW-Radar) oder durch Messung des Dopplershifts erfolgen. Je nach Frequenz und geometrischen Abmessungen sind die verschiedenen Methoden unterschiedlich aufwendig zu realisieren. Eine TOF-Messung (Time of Flight) wird bei sehr kurzen Distanzen eher durch eine Phasendifferenzmessung zwischen Sende- und Empfangssignal realisiert als durch Messung der absoluten Laufzeit des Empfangssignals. Dopplershiftmessung hat das Problem, dass bei stillstehendem Messwertgeber kein verwertbares Signal entsteht - dieses Verfahren ist hier daher eher ungeeignet. Die Messung der Frequenzdifferenz zwischen Sende- und Empfangssignal bei einem frequenzmodulierten Sendesignal (FMCW oder Frequenzsprungmodulation) ist eher geeignet, da anhand der Frequenzdifferenz z.B. in einer FFT des Messsignals auch Mehrfachechos zweifelsfrei erkannt werden können. Allerdings erfordert die Anwendung und Auswertung dieses Verfahren einen nicht unerheblichen Schaltungsaufwand.

Ist die zu erwartende mechanische Toleranz bzw. Vibration klein gegenüber der Wellenlänge der verwendeten Radiowellen, kann z.B. eine in Halb- oder Viertelkreis-Segmente (450) um effektiv je einen Bruchteil der Wellenlänge veränderte Bauhöhe dazu genutzt werden, die relative Phase des empfangenen Signals gegenüber der Phase des Sendesignals zu erfassen, um über die so zusätzlich ermittelte Lage der Segmente eine Eindeutigkeit des gemessenen Winkels auch in einem 360°-Intervall zu gewährleisten. Dabei kann die Messung entweder achszentrisch erfolgen, wobei verschiedene Empfänger vorzugsweise von verschiedenen Quadranten veränderte Radiowellen messen, oder auch gegenüber der Drehachse verschoben, wobei Sender (421) und Empfänger (422,423) vorzugsweise überwiegend vom selben Segment veränderte Radiowellen empfangen.

Die Robustheit der in 360° eindeutigen Messung dadurch weiter verbessert werden, dass sie nur bei ruhendem oder fast ruhendem anisotropen Messwertgeber ausgewertet wird und im Betrieb dieselbe Information aus der Kontinuität der Messwerte abgeleitet wird (d.h. es werden mehr als zwei Messungen pro Periode durchgeführt). Auch eine Plausibilitätsprüfung aus fortlaufender Messung der Zusatzinformation mit fortgeschriebenen Kontinuitätsdaten ist sinnvoll, weil sie eine eventuelle anfängliche Fehlmessung im Betrieb korrigieren kann.

Gemäß einer Ausgestaltung der erfindungsgemäßen Vorrichtung zur Veränderung und Messung der Polarisation von Radiowellen weist
- der anisotrope Messwertgeber eine strukturelle Asymmetrie auf,
- sind die Empfänger der Radiowellen geeignet, die strukturelle Asymmetrie zu messen,
- erfolgt eine eindeutige Messung über den relativen Drehwinkel des anisotropen Messwertgebers in einem 360°-Intervall aus der Kombination aller gemessenen Signale der Vorrichtung.

Ist der anisotrope Messwertgeber (303) z.B. gegenüber seiner Drehachse (304) geneigt oder weist andere Merkmale wie eine unterschiedliche Dicke auf, so können die Empfänger der Radiowellen neben der Polarisationsinformation auch eine Abstandsinformation gewinnen, die eine eindeutige Zuordnung des Drehwinkels in einem 360°-Intervall erlaubt. Die Erweiterung des eindeutigen Messbereichs von 180° auf 360° ist für viele Anwendungen wichtig.

Gemäß einer Ausgestaltung der erfindungsgemäßen Vorrichtung zur Veränderung und Messung der Polarisation von Radiowellen weist
- der anisotrope Messwertgeber eine strukturelle Asymmetrie auf,
- ist mindestens eine weitere sensorische Komponente zur Messung der strukturellen Asymmetrie vorhanden,
- erfolgt eine eindeutige Messung über den relativen Drehwinkel des anisotropen Messwertgebers in einem 360°-Intervall aus der Kombination aller gemessenen Signale der Vorrichtung.

Um die Komplexität der Empfänger klein zu halten ist es u.U. sinnvoll, die benötigte Zusatzinformation für das 360°-Intervall aus einer separaten Messung zu gewinnen. Hierfür können prinzipiell alle Arten von Sensoren verwendet werden. Die strukturelle Asymmetrie kann ebenfalls auf vielfältige Art und Weise erzeugt werden. Vorzugsweise werden sehr robuste Messverfahren eingesetzt, um die ansonsten hohe Robustheit der erfindungsgemäßen Vorrichtung nicht zu beeinträchtigen. Neben der Polarisationsmessung von Radiowellen sind kapazitive und induktive Verfahren denkbar, die zudem in differentieller Weise verwendet werden können.

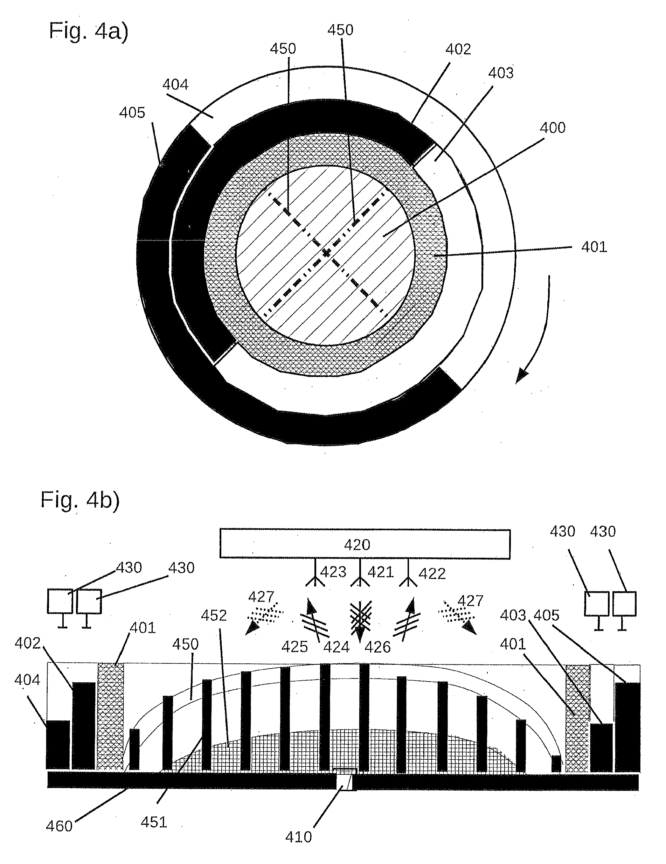

Fig. 4a zeigt eine beispielhafte Realisierung des Messwertgebers für die Messung in Draufsicht. Im Zentrum ist der anisotrope Teil (400) zu sehen. Dieser kann durch einen Abschirmungs- oder Absorbtionsbereich (401) von den übrigen Strukturelementen getrennt sein. Außerhalb befinden sich zur Realisierung der strukturellen Asymmetrie z.B. auf unterschiedlichen Radien Spuren mit binären Codeelementen (402/403 und 404/405), die z.B. unterschiedliche Höhen zur Verwendung mit einem induktiven oder kapazitiven Sensor (430) aufweisen oder auch unterschiedlich polarisierend wirken können (zur Messung mit weiteren erfindungsgemäßen Vorrichtungen).

Um eine besonders robuste Messung dieser Informationen zu erhalten sind differentielle Messungen an sich gegenüberliegenden Stellen sinnvoll. Die Verwendung von zwei Spuren statt einer macht die Messung an den Übergangsstellen besonders robust. Diese Spuren sollten, um die Justage- und Vibrationsunempfindlichkeit nicht zu beeinträchtigen, ausreichend breit ausgelegt sein. Es ist unerheblich, an welcher Stelle diese zusätzlichen Informationen gemessen werden, die Anordnung in Fig. 4a zeigt nur ein Beispiel.

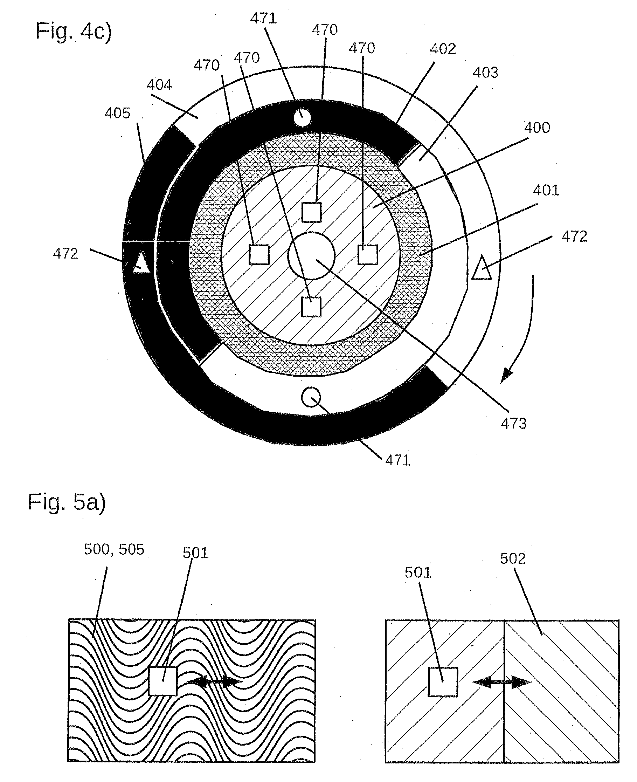

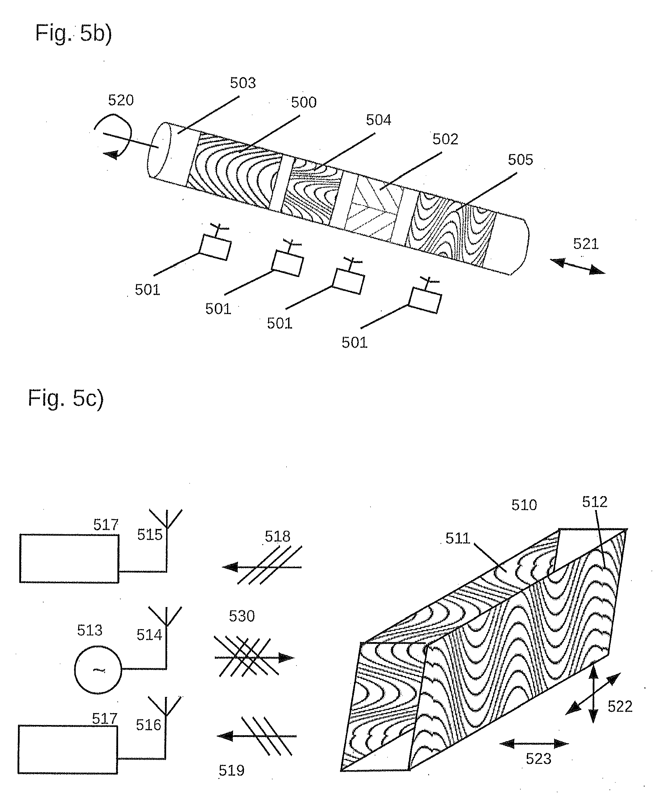

An geeigneter Stelle können Mechanismen zur mechanischen Fixierung an einer Welle oder ähnlichem (410) vorgesehen werden. Der Messwertgeber kann auch hohl ausgeführt werden, wie Fig. 4c und Fig. 5b exemplarisch zeigen.

Gemäß einer Ausgestaltung der erfindungsgemäßen Vorrichtung zur Veränderung und Messung der Polarisation von Radiowellen ist der anisotrope Messwertgeber so geformt, dass die Empfänger Mehrfachreflexionen der vom Sender ausgehenden Radiowellen abgeschwächt empfangen.

Die Verwendung von Radiowellen auf kleinstem Raum hat zur Folge, dass Mehrfachreflexionen viel stärkeren Einfluss auf das Messergebnis haben. Dies stellt insbesondere in Hinblick auf die gewünschte Vibrationsunempfindlichkeit ein Problem dar. Da die Bündelung der Strahlung mit jeder Reflexion schwächer wird, kann z.B. durch eine effektive Wölbung der anisotropen Struktur (400) des Messwertgebers eine Ablenkung der mehrfach reflektierten Radiowellen (427) nach außen verstärkt werden, wo sie durch absorbierende Elemente vernichtet werden können. Eine beispielhafte Realisierung zeigt Fig. 4b, der Seitenansicht des in Fig. 4a gezeigten anisotropen Messwertgebers.

Die zuvor hergeleitete und aufgezeigte Aufgabe wird gemäß einer weiteren Lehre der vorliegenden Erfindung gelöst durch eine Vorrichtung zur Messung von Drehwinkel oder Drehgeschwindigkeit, mit einem konfigurierbaren Sende-Empfänger (600) für polarisierte Radiowellen (603), einer Antenne (601) für polarisierte Radiowellen, einem Sendeverstärker (600), einem Empfangsverstärker (600) und einem für die gesendeten Radiowellen anisotropen Messwertgeber (602), wobei der anisotrope Messwertgeber gegenüber dem Sende-Empfänger um eine Drehachse drehbar ist, wobei Sende- und Empfangsverstärker gemeinsam benutzte Schaltungskomponenten aufweisen, wobei die vom Sende-Empfänger gesendeten Radiowellen durch den anisotropen Messwertgeber (602) veränder werden und die veränderten Radiowellen von derselben Antenne (601) empfang werden, wobei Einrichtungen vorgesehen sind, die konfiguriert sind, aus den Signalen der polarisations empfindlichen Empfänger (104,105,105) eine Aussage über die Polarisation der empfangenen Radiowellen zu treffen.

Die zuvor hergeleitete und aufgezeigte Aufgabe wird gemäß einer weiteren Lehre der vorliegenden Erfindung gelöst durch ein Verfahren zur Veränderung und Messung der Polarisation von Radiowellen, insbesondere unter Verwendung einer erfindungsgemäßen Vorrichtung mit einem konfigurierbaren Sende-Empfänger (600) für polarisierte Radiowellen, einer Antenne (601) für polarisierte Radiowellen, einem Sendeverstärker (600), einem Empfangsverstärker (600) und einem für die gesendeten Radiowellen anisotropen Messwertgeber (602), wobei der anisotrope Messwertgeber gegenüber dem Sende-Empfänger um eine Drehachse drehbar oder gegenüber dem Sende-Empfänger verschiebbar ist, wobei Sende- und Empfangsverstärker gemeinsam benutzte Schaltungskomponenten aufweisen, wobei die vom Sende-Empfänger gesendeten Radiowellen durch den anisotropen Messwertgeber (602) verändert werden und die veränderten Radiowellen von derselben Antenne (601) empfangen werden.

Ausgestaltungen der Vorrichtung und des Verfahrens sind Gegenstand der Unteransprüche und werden im Folgenden beschrieben.

Gemäß einer Ausgestaltung der erfindungsgemäßen Vorrichtung zur Veränderung und Messung der Polarisation von Radiowellen umfasst die Vorrichtung mindestens zwei konfigurierbare Sende-Empfänger für polarisierte Radiowellen mit jeweils mindestens einer Antenne (601) für unterschiedlich polarisierte Radiowellen, mit ansonsten gleichen Merkmalen wie im vorangehenden Absatz.

Die zuvor hergeleitete und aufgezeigte Aufgabe wird gemäß einer weiteren Lehre der vorliegenden Erfindung durch eine Vorrichtung gelöst, dadurch gekennzeichnet, dass Teile ihrer Oberfläche einen anisotropen Messwertgeber derart formen, dass auf sie treffende Radiowellen in ihrer Polarisation so verändert werden, dass mit einer erfindungsgemäßen Vorrichtung ihr Drehwinkel, ihre Drehzahl oder ihre Verschiebung messbar sind.

In diesem Fall übernimmt der Messwertgeber auch andere Funktionen in der zu messenden Apparatur. In einigen Fällen kann bei der Herstellung etwa einer Turbinenwelle oder Nockenwelle die benötigte anisotrope Struktur am Ende oder am Umfang der Welle gleich mit hergestellt werden, wodurch sich neben Kosteneinsparungen die spätere Montage und Justage erübrigen. Die Hauptfunktion der Komponente ist in diesem Fall eine mechanische Funktion. Durch geeignete Formgebung oder Strukturierung gewinnt die mechanische Komponente der zu messenden Apparatur eine weitere Funktion als Messwertgeber.

Ausgestaltungen der Vorrichtung sind Gegenstand der Unteransprüche und werden im Folgenden beschrieben.

Eine vorteilhafte Verwendung der erfindungsgemäßen Vorrichtung zur Veränderung und Messung der Polarisation von Radiowellen ist die Messung eines mechanischen Drehwinkels oder einer Drehgeschwindigkeit.

Bei einer besonders kompakten Anordnung wird der anisotrope Messwertgeber (303) auf das Ende einer Welle montiert. Die erfindungsgemäße Vorrichtung ist dadurch in der Lage, den absoluten Winkel der Welle, ihre möglicherweise vorhandene Drehgeschwindigkeit sowie Drehrichtung zu messen.

Eine vorteilhafte Verwendung der erfindungsgemäßen Vorrichtung zur Veränderung und Messung der Polarisation von Radiowellen ist die Messung einer Verschiebung.
Weist der anisotrope Messwertgeber eine lateral unterschiedliche Polarisation auf, so kann mit der erfindungsgemäßen Vorrichtung eine Verschiebung des Messwertgebers gegenüber den übrigen Komponenten der Vorrichtung gemessen werden. Hier ist insbesondere die Verschiebung bei gleichbleibendem Abstand von Interesse. Ein normales RADAR ist gegenüber derartigen Verschiebungen unempfindlich, da weder das Target (der anisotrope Messwertgeber) eine geeignete Struktur aufweist noch das Radar zur genauen Analyse der Polarisation ausgelegt ist.

Eine weitere vorteilhafte Verwendung der Vorrichtung nach einem der vorangehenden Ansprüche ist die Messung eines Drehwinkels, einer Drehgeschwindigkeit oder einer Verschiebung mit mehreren lateral verteilten erfindungsgemäßen Vorrichtungen an verschiedenen Stellen auf einem gemeinsam genutzten Messwertgeber.

Aufgrund der Translationsinvarianz der Polarisationsmessung kann auf diese Weise eine besonders geringe Ausfallwahrscheinlichkeit gewährleistet werden, weil selbst bei teilweiser Zerstörung oder wirksamer Abdeckung von Teilen des anisotropen Messwertgebers (400) oder bei Ausfall einzelner Sensoreinheiten (430) bzw. (470) etwa mit Hilfe von Medianfilterung ein korrekter Winkel gemessen werden kann. Die Sensoreinheit (430 bzw. 470) besteht dabei aus den übrigen Komponenten der erfindungsgemäßen Vorrichtung mit Ausnahme des anisotropen Drehgebers, also Sender, Empfänger, Antennen und ggfs. Gehäuse.

Eine weitere vorteilhafte Verwendung der Vorrichtung nach einem der vorangehenden Ansprüche ist die Messung eines Drehwinkels, einer Drehgeschwindigkeit oder einer Verschiebung am Umfang einer Struktur, wobei der Umfang der Struktur die Merkmale des anisotropen Messwertgebers nach mindestens einem der erfindungsgemäßen Ansprüche aufweist.

Die zuvor genannten Merkmale können in beliebiger Kombination miteinander kombiniert werden. Weiterhin sind alle genannten Ausführungsformen als Beispiele zu verstehen. Abweichende Realisierungen sind im Sinn und Umfang der vorliegenden Erfindung möglich.

Detaillierte Beschreibungen der Verwendungen finden sich in den Verwendungsbeispielen.

### Kurzbeschreibung der Zeichnungen:

Die Erfindung wird im Folgenden anhand von Ausführungsbeispielen näher erläutert, wozu auf die beigefügten Zeichnungen Bezug genommen wird. Es zeigen:
- Fig. 1a:: Erfindungsgemäße Anordnung von Sender und Empfängern für Radiowellen sowie anisotropem Messwertgeber in transmissiver Anordnung
- Fig. 1b:: Erfindungsgemäße Anordnung von Sender und Empfängern für Radiowellen sowie anisotropem Messwertgeber in reflektiver Anordnung
- Fig. 1c:: Beispielhafte erfindungsgemäße Orientierung von linear polarisierten Sende- und Empfangsantennen
- Fig. 2a:: Sender mit Antenne für linear polarisierende Radiowellen
- Fig. 2b:: Sender mit Antenne für zirkular polarisierende Radiowellen (Helix)
- Fig. 2c:: Sender mit Antenne für zirkular polarisierende Radiowellen (linear polarisierende Antenne mit nachgeschaltetem Verzögerungselement)
- Fig. 2d:: Beispielhafte Orientierung von linear polarisierten Antennen bei im Mittel unpolarisierten gesendeten Radiowellen
- Fig. 3:: Beispielhafte erfindungsgemäße Vorrichtung mit Gehäuse und dämpfenden Materialien
- Fig. 4a:: Beispielhafte Ausgestaltung des anisotropen Messwertgebers mit struktureller Asymmetrie zur eindeutigen Messung von Winkeln in einem 360°-Intervall, Draufsicht. Strukturelle Asymmetrie Typ 1 durch Halbkreissegmente (402-405), Typ 2 durch unterschiedlich dicke Segmente des Messwertgebers, angedeutet durch (450)
- Fig. 4b:: Beispielhafte Ausgestaltung des anisotropen Messwertgebers zur Reduktion von Mehrfachreflexionen geeigneter Formgebung. Seitenansicht mit struktureller Asymmetrie Typ 1 (402-405) und zusätzlichen Sensoren (430), Filter (401), Wölbung von (450) zur Reduktion von Mehrfachreflexionen
- Fig. 4c:: Beispielhafte Ausgestaltung der Verwendung der erfindungsgemäßen Vorrichtung an mehreren Stellen auf einem gemeinsam genutzten Messwertgeber, Draufsicht
- Fig. 5a:: Beispielhafte Ausgestaltung des anisotropen Messwertgebers zur Messung von axialen Verschiebungen oder zur Messung von Drehwinkel oder Verschiebung am Umfang einer Welle (Abwicklung)
- Fig. 5b:: Beispielhafte Ausgestaltung der Verwendung der erfindungsgemäßen Vorrichtung zur Messung eines Drehwinkels am Umfang einer Struktur
- Fig. 5c:: Doppelte bzw. doppelseitige Strukturierung des anisotropen Messwertgebers in orthogonalen Richtungen zur Messung von zweiachsigen Verschiebungen oder zur kombinierten Messung von Achsverschiebung und Drehwinkel am Umfang einer Welle (Abwicklung)
- Fig. 6a:: Beispielhafte Ausgestaltung eines erfindungsgemäßen polarisationsempfindlichen Sende-Empfängers mit zwei alternativen Auswerteverfahren: a) super-regenerativer Impulsbetrieb (ohne (630,631)) und b) im amplitudengeregelten Betrieb (mit (630,631))
- Fig. 6b:: Beispielhafter Zeitverlauf der Steuer- und Messsignale der Anordnung in Fig. 6a bei paralleler (links) und orthogonaler (rechts) Orientierung zwischen Antenne und Messwertgeber

Beschreibung von speziellen Ausführungsbeispielen bzw. Anwendungsbeispielen der Erfindung:
Es ist eine Aufgabe der Erfindung, eine justage- und vibrationsunempfindliche Winkelmessung zu ermöglichen. Die Erfindung ermöglicht es, mit robusten Materialien wie Edelstahl und Keramik zu arbeiten, ist temperatur- und schmutzunempfindlich und führt sowohl bei ruhenden als auch bei rotierenden Messobjekten zu genauen Messwerten. Die Messung kann schnell und ohne große Latenz erfolgen und kann damit auch in Regelkreisen für schnell bewegliche Gegenstände eingesetzt werden. Eine weitere Aufgabe der Erfindung ist die Messung von Verschiebungen.

### Beispiel 1: Drehwinkelmessung an einer Nockenwelle

Seit langer Zeit werden Verbrennungsmotoren z.B. im Automobil durch einen Anlasser gestartet, obwohl bei Kenntnis des aktuellen Drehwinkels der Kurbelwelle eine direkte Zündung des aktuell in der richtigen Position befindlichen Zylinders möglich wäre. Dies ist dem Umstand geschuldet, dass derzeit keine ausreichend genauen und robusten Winkelsensoren auf dem Markt sind, die langfristig die Betriebsbedingungen an der Nockenwelle aushalten würden.

Erst in jüngster Zeit haben es inkrementelle magnetische Zahnradsensoren in die KFZ-Serienproduktion geschafft. Sie kranken jedoch daran, dass sie nur inkrementell arbeiten, also nach der Inbetriebnahme die absolute Winkelposition nicht kennen. Daher ist nach dem ersten Start der Anlasser erforderlich, um in der ersten Umdrehung eine Indexmarke zu finden. Solange der Sensor dann in Betrieb bleibt, kann der Verbrennungsmotor z.B. an Ampeln gestoppt und ohne Zuhilfenahme des Anlassers sehr schnell wieder gestartet werden.

Dies ist zwar ein deutlicher Fortschritt, weil er den Treibstoffverbrauch reduzieren hilft. Allerdings erscheint die Lösung unelegant, weil der schwere und teure Anlasser noch immer nur wegen der Unzulänglichkeit des Winkelsensors an der Nockenwelle benötigt wird.

Der erfindungsgemäße Sensor wird beispielsweise mit einem Messwertgeber ähnlich Fig. 4a und Fig. 4b ausgestattet, der aus einem massiven Metallblock bestehen kann und somit gegen Temperatur und Schmutz unempfindlich ist. Die übrigen Sensorkomponenten können in einem hermetisch dichten Gehäuse (z.B. Keramik) untergebracht sein und sind durch das Gehäuse (ähnlich Fig. 3) mechanisch vom Motorblock entkoppelt, insbesondere auch thermisch weniger stark belastet. Durch die Winkelmessung mittels Polarisation von Radiowellen sind Vibrationen, Wärmeausdehnung, Schmutz etc. tolerierbar. Der Sensor kann das ermittelte Signal mit hoher Genauigkeit und Auflösung auf eine elektrisch robuste Weise zur Motorelektronik übertragen, wo die Zündsignale generiert werden.

### Beispiel 2: Zustandsmessung von Komponenten an schweren Baumaschinen

Ganz ähnlich der Problematik in Beispiel 1 gibt es auch Schwierigkeiten, hydraulisch oder pneumatisch betriebene Elemente von schweren Maschinen zu kontrollieren. In Ermangelung von robusten Drehgebern wird derzeit u.a. intensiv an robusten Wegmessern gearbeitet, die z.B. die Auslenkung eines Hydraulik-Kolbens messen sollen. Auch hier beeinträchtigen etwa Mehrwege-Ausbreitung von RADAR-Wellen längs eines ölgefüllten Zylinders einerseits und starke Dämpfung im Öl andererseits die Messgenauigkeit. Die Messung des Gelenkwinkels mittels Polarisation ist auch hier eine robustere Lösung, wobei ein Außengehäuse z.B. aus Edelstahl und eine innere Gehäusewand aus Keramik den Sensor gegen alle Umwelteinflüsse schützen kann.

Neben den genannten hydraulisch betriebenen Gelenken sind auch Turmaufbauten von Kränen und Baggern ein Anwendungsfall. Hier kann z.B. die Oberseite des Unterbaus mit einem vergleichsweise großflächigen Messwertgeber ausgestattet werden, während an verschiedenen Stellen des drehbaren Aufbaus erfindungsgemäße Vorrichtungen redundant den Drehwinkel des Aufbaus messen (bzw. umgekehrt). Diese Anordnung entspricht Fig. 4c und ist gleichzeitig ein Beispiel, bei dem keine bauliche Einheit zwischen Sender und Empfänger einerseits und dem Messwertgeber andererseits besteht und folglich auch kein geschlossenes Gehäuse.

### Beispiel 3: Überwachung von Pumpen und Durchflussmessung

Bei geeigneter Frequenz können Radiowellen Flüssigkeiten hinreichend gut durchdringen. Hierbei ist es für die Polarisationsmessung mit der erfindungsgemäßen Vorrichtung unerheblich, ob die Flüssigkeit oder ein umgebendes Rohr transparent sind oder ob die Flüssigkeit ggfs. auch größere Schwebteilchen mit sich führt. Ein drehbar gelagertes Flügelrad oder die Welle einer Pumpe können mit dem erfindungsgemäßen Messwertgeber ausgestattet werden, wobei auch hier die Variante aus einem monolithischen Materialblock, etwa Edelstahl, zu bevorzugen ist, um Alterung und Korrosion zu vermeiden. Der übrige Teil der Vorrichtung kann sich dabei außerhalb der Flüssigkeit befinden und die Radiowellen durch ein Kunststoffrohr senden. Alternativ kann z.B. auch ein Keramikfenster vorgesehen werden, wenn das Rohr nicht transparent für die Radiowellen ist.

### Beispiel 4: Messung an massiven Wellen sowie Translationsmessung

Etwa im Bereich der Energietechnik gibt es das Problem, dass ein Drehwinkel am Umfang einer sehr massiven Welle gemessen werden muss, deren Umfang einen Meter überschreiten kann. Hier scheiden optische Verfahren bislang aus, auch magnetische Sensoren sind nur mit einigem Aufwand nutzbar und liefern dabei meist auch nur inkrementelle Informationen.
Ein Problem bei der Montage von Messwertgebern am Umfang einer sehr großen Struktur ist die Wärmeausdehnung, die für verschiedene Materialien unterschiedlich stark ist und zu Materialermüdung oder zur Ablösung der Messwertgeberstruktur von der Welle (503) führen kann.

Der Vorteil der erfindungsgemäßen Vorrichtung ist, dass der Messwertgeber (500,502,504,505) aus verschiedenen Materialien hergestellt werden kann, d.h. auch aus demselben Material, aus dem die Welle (503) besteht. Ein um die Welle gelegtes und fixiertes Blech (500), das z.B. durch Walzen oder Tiefziehen eine anisotrope Struktur bekommen hat, die im Umlauf um die Welle z.B. eine Sinusform beschreibt, kann zur Messung des Drehwinkels im seitlichen Blick der Sensoreinheit (501) auf die Welle verwendet werden. In diesem Fall wird die Drehung der Welle in eine örtlich unterschiedliche Orientierung der anisotropen Struktur auf dem Messwertgeber (500) umgesetzt, was bei ausreichend großem Wellendurchmesser sehr einfach zu realisieren ist.

Ein weiterer interessanter Aspekt an dieser Anordnung ist, dass die Periodizität der anisotropen Struktur nicht zwangsläufig eine Periode pro Umdrehung betragen muss. Hier sind zur Erhöhung der Auflösung und Genauigkeit auch nebeneinanderliegende Spuren mit verschiedenzahligen Perioden pro Umdrehung denkbar (504).

Bei Verwendung eines orthogonal orientierten anisotropen Messwertgebers (505) kann auch eine lineare Verschiebung der Welle (503) längs der Achse, unabhängig von ihrem Drehwinkel, gemessen werden. Das wird einfach verständlich, wenn man die Abwicklung des Messwertgebers (500) in Fig. 5a betrachtet. In der Abwicklung ist eine Verschiebung gegenüber der Sensoreinheit (501) in einer Raumrichtung wirkungslos, in der dazu orthogonalen Raumrichtung führt eine Verschiebung zur Änderung der gemessenen Polarisationsrichtung.

Durch Kombination mehrerer anisotroper Messwertgeber (500,502,504,505) in unterschiedlicher Orientierung und Verwendung mehrerer Vorrichtungen zum Senden und Empfangen von Radiowellen (501) kann gleichzeitig der momentane Drehwinkel und die axiale Verschiebung einer Welle (503), etwa in einem Schaltgetriebe, gemessen werden.

Wird der anisotrope Messwertgeber (510) auf beiden Seiten in orthogonaler Weise strukturiert, so kann entweder von beiden Seiten eine Verschiebung in unterschiedlichen Raumrichtungen gemessen werden oder es werden bei zeitlicher Auflösung der gemessenen Signale die unterschiedlich verzögerten Echos der beiden Seiten auf einer Seite des anisotropen Messwertgebers (510) gemessen. Dies ermöglicht die Messung auch zweidimensionaler Verschiebungen, oder, bei Ummantelung einer Welle (503), die kombinierte Rotation und Verschiebung der Welle.

### Beispiel 4: Ausführungsbeispiel eines kombinierten Sende-Empfängers

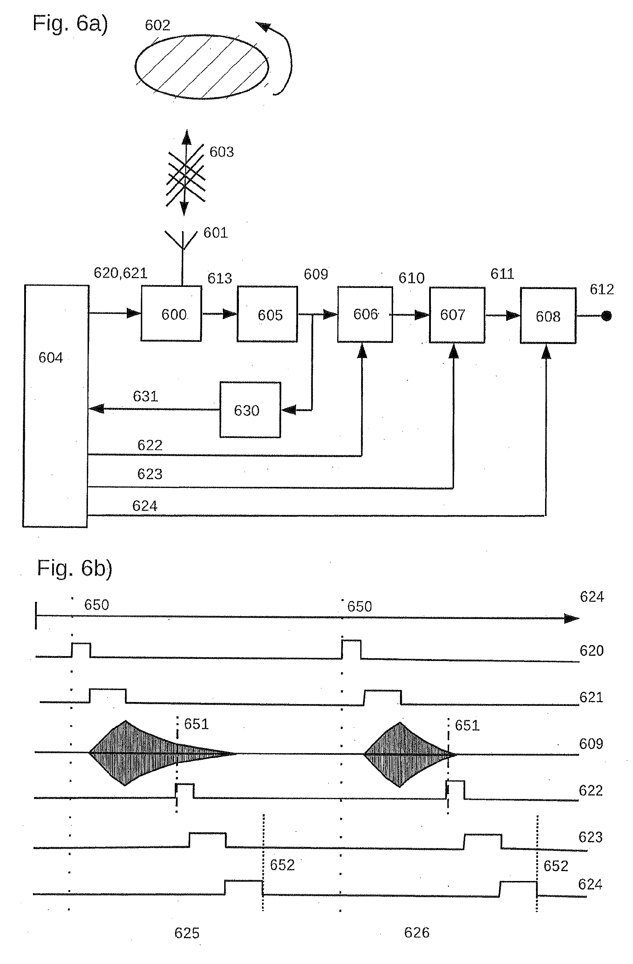

Für die hier beschriebenen Messprobleme sind einerseits nur sehr geringe Sendeleistungen erforderlich, anderseits ist auch der benötigte Dynamikbereich der Empfangssignale vergleichsweise klein, da sich die Abstände der Komponenten der Vorrichtung nur schwach ändern. Dies kann zur Vereinfachung von Schaltungskomponenten ausgenutzt werden. Im Hochfrequenzbereich kann ein LC-Oszillator mit einer linear polarisierenden Dipolantenne kombiniert werden, da eine Induktivität schon durch ein kurzes Leitungssegment realisiert werden kann. Damit der Oszillator schwingt, muss mehr Energie aufgebracht werden, als er verbraucht bzw. abstrahlt. Dies kann durch ein hinreichend starkes Biassignal bzw. einen ausreichend hohen Verstärkungsfaktor sichergestellt werden. In Fig. 6a) wird das vom Oszillator (600) abgestrahlte Signal der Spule/Antenne (601) vom anisotropen Messwertgeber (602) je nach Orientierung unterschiedlich stark reflektiert, wodurch sich einerseits die Amplitude des Oszillatorsignals ändert und anderseits nach Reduktion des Biasstroms bzw. Umschalten der Komponente (600) in einen Verstärker das Signal unterschiedlich stark abklingt.

In einer ersten Schaltungsvariante kann nun z.B. nach einer bestimmten Zeit nach Umschalten in den Empfangsmodus die abgeklungene Amplitude(613) nach Verstärkung in (605) an (609) gemessen und verarbeitet werden, wozu etwa der Track and Hold (606), Analog-Digital-Wandler (607) und die Auswerteeinheit (608) dienen, die von Steuersignalen (620) bis (624) von der Steuereinheit (604) gesteuert werden und das Endergebnis (612) erzeugen. In diesem Fall müssen einerseits kritische Timings eingehalten werden, andererseits ist das gemessene Signal näherungsweise exponentiell nichtlinear über der Zeit.

In einer alternativen Schaltungsvariante wird der Oszillator (600) dauerhaft betrieben und das durch (605) verstärkte Signal (609) durch eine Vergleichsschaltung (630) mit einer vorgegebenen Amplitudenschwelle verglichen. Das Messergebnis wird an die Steuereinheit (604) zur Kontrolle von Gain oder Bias des Oszillators (600) weitergeleitet. Das Messergebnis steht nun indirekt in Form der Steuergröße (621) zur Verfügung, da die Güte des Oszillators vom Drehwinkel des anisotropen Messwertgebers (602) abhängt und die benötigte Leistung des Oszillators (600) von dessen Güte. Diese Abhängigkeit ist näherungsweise quadratisch und daher von der Signalverarbeitung her einfacher. Zudem entfällt in diesem Fall die zeitkritische Steuerung der verschiedenen Signale, die Regelung kann mit niedriger Bandbreite erfolgen. Ein Messwert kann dabei prinzipiell auch zeitkontinuierlich ausgegeben werden.

Durch Vergleich der Regelgrößen zwischen unterschiedlich orientierten Sende-Empfängern kann wiederum eine Relativmessung zur Bestimmung des Winkels erfolgen.

### Kurzbeschreibung der Bezugszeichen:

- 100: Generator/Oszillator
- 101: Sendeantenne für Radiowellen
- 102: gesendete Radiowellen, ggfs. Mit verschiedenen Polarisationseigenschaften
- 103: anisotroper Messwertgeber
- 104,105: Empfangsantennen für unterschiedlich polarisierte Radiowellen (z.B. s- und p-Pol.)
- 106: Empfänger und Signalaufbereitungsschaltung
- 107,108: unterschiedlich polarisierte Anteile der empfangenen Radiowellen
- 109: Winkel zwischen den Antennen, z.B. 45°
- 200: Generator/Oszillator
- 201: überwiegend linear polarisierte Antenne, z.B. Dipol
- 202: linear polarisierte Radiowellen
- 203: Helixantenne oder andere zur Erzeugung zirkulär polarisierter Wellen geeignete Struktur
- 204: zirkulär polarisierte Radiowelle
- 205: Verzögerungsplättchen, erzeugt eine für unterschiedliche Polarisationsrichtungen unterschiedliche Phasendifferenz
- 206: zirkulär oder elliptisch polarisierte Radiowelle
- 300,301: Gehäuseteile
- 302: Radiowellen absorbierendes Material bzw. Strukturkomponente
- 303: anisotroper Messwertgeber (beispielhafte Ausführung aus Fig. 4)
- 304: Welle oder andere mit 303 mechanisch verbundene Komponente
- 305: Baugruppe mit Sender und Empfänger und ggfs. weiteren Komponenten
- 306: Sendeantenne
- 307,308: Empfangsantennen
- 309: Montagekomponenten, z.B. Schrauben
- 310: gesendete Radiowellen
- 311,312: empfangene Radiowellen unterschiedlicher Polarisation
- 400: anisotroper Bereich des anisotropen Messwertgebers
- 401: Radiowellen absorbierendes Material bzw. Strukturkomponente
- 402-405: asymmetrische Komponenten zur Erweiterung des Meßbereichs auf 360°
- 410: Montagevorrichtung, z.B. Gewindebohrung
- 420: erfindungsgemäße Anordnung von Sende- und Empfangseinrichtungen für Radiowellen (Sender, Empfänger, Antennen, Auswerteelemente)
- 421: Sendeantenne
- 422,423: Empfangsantennen
- 424: gesendete Radiowellen
- 425,426: empfangene Radiowellen unterschiedlicher Polarisation
- 427: Mehrfach reflektierte Radiowellen
- 430: zusätzliche Sensorelemente zur Erweiterung des Meßbereichs auf 360°
- 450: symbolische Andeutung von Kreisabschnitten mit unterschiedlichen Dicken/Höhenprofilen zur Erweiterung des Meßbereichs auf 360°
- 451: beispielhaftes Element zur Polarisation von Radiowellen: langer schmaler Metallsteg mit einer vorzugsweisen Höhe (zwischen 400 und 450) in Vielfachen eines Viertels der Wellenlänge der Radiowellen
- 452: Grundkörper, wahlweise durchlässig, absorbierend oder reflektierend. Die beispielhafte linsenförmige Formgebung des Profils dient der Reduktion von empfangenen Mehrfachreflexionen
- 460: Grundkörper mit Vorrichtung zur mechanischen Fixierung, Teil von 452 oder separat, Material wie 452 oder anders
- 470: räumlich verteilte Sende/Empfangseinheiten für Radiowellen
- 471,472: zusätzliche sensorische Einheiten zur Erweiterung des Meßbereichs auf 360°
- 473: optionale Aussparung im anisotropen Messwertgeber, z.B. zum Aufschieben auf eine Welle
- 500,505: anisotroper Messwertgeber (Platte oder Ansicht einer Abwicklung) mit analog ortsabhängiger Anisotropie. Räumliche Orientierung, Periodenlängen und andere Merkmale können variieren
- 501: erfindungsgemäße Anordnung von Sende- und Empfangseinrichtungen für Radiowellen (Sender, Empfänger, Antennen, Auswerteelemente)
- 502: anisotroper Messwertgeber (Platte oder Ansicht einer Abwicklung) mit digital ortsabhängiger Anisotropie
- 503: Welle oder anderes Werkstück mit Dreh- und/oder Verschiebungsfreiheitsgrad
- 504: anisotroper Messwertgeber (Platte oder Ansicht einer Abwicklung) mit räumlich höherfrequenter Anisotropie als 500,505
- 510: anisotroper Messwertgeber (Platte oder Ansicht einer Abwicklung) mit ortsabhängiger Anisotropie in mindestens zwei verschiedenen Ebenen, die vorzugsweise voneinander um mindestens eine viertel Wellenlänge der Radiowellen beabstandet sind
- 511,512: anisotrope Strukturkomponenten in unterschiedlichen Ebenen eines anisotropen Messwertgebers
- 513: Sender für Radiowellen
- 514: Antenne für gesendete Radiowellen
- 515, 516: Antenne für verschieden polarisierte Radiowellen
- 517: Verstärker und Auswerteelemente
- 518,519: verschieden polarisierte Anteile transmittierter oder rückgestreuter Radiowellen
- 520: Indikation der Drehachse
- 521: Indikation einer Verschiebung längs der Achse
- 522: Indikation der Verschiebung in zwei Ebenen mit gleichbleibendem Abstand zu den Empfängern 517
- 523: Indikation einer Verschiebung unter Änderung des Abstands zu den Empfängern 517 (klassische RADAR-Abstandsmessung)
- 530: Gesendete Radiowellen
- 600: Konfigurierbare Sende-/Empfangsschaltung, z.B. super-regenerativer Empfänger
- 601: Kombinierte Sende- und Empfangsantenne
- 602: anisotroper Meßwertgeber
- 603: gesendete bzw. empfangene Radiowellen
- 604: Steuereinheit
- 605: Verstärker
- 606: Track&Hold, Filter
- 607: Analog-Digital-Wandler
- 608: Auswerteeinheit
- 609: nachverstärktes Signal
- 610: gefiltertes und/oder zwischengespeichertes Signal
- 611: digitalisiertes Signal
- 612: Ausgangssignal (z.B. Winkel in Grad)
- 613: beobachtetes Signal an der konfigurierbaren Sende-/Empfangsschaltung
- 620,621: Steuersignale (Restschwingungsunterdrückungsimpuls, Verstärkungskontrollsignal)
- 622-624: Steuersignale (Ansteuerung T&H, Ansteuerung ADC, Ansteuerung Auswerteeinheit)
- 625: Verlauf einer Messung mit starkem Echo
- 626: Verlauf einer Messung mit schwachem Echo
- 630: Vergleichsschaltung
- 631: Rückkoppelsignal
- 650: Zeitpunkt Beginn einer Messung
- 651: Zeitpunkt Entnahme einer Stichprobe des Messsignals an 609
- 652: Zeitpunkt Bereitstellung des Messergebnisses 612

## Patentansprüche

1. Vorrichtung zur Messung von Drehwinkel oder Drehgeschwindigkeit mit
- mindestens einem Sender (100,101) von Radiowellen (102),
- mindestens zwei Empfängern (104,105,106) für Radiowellen,
- einem für die vom Sender ausgehenden Radiowellen anisotropen Messwertgeber (103),
- wobei der anisotrope Messwertgeber (103) gegenüber den Empfängern (104,105) um eine
Drehachse drehbar ist,
- wobei die Empfänger (104,105,106) polarisationsempfindlich sind,
- wobei die vom Sender (100,101) ausgehenden Radiowellen (102) durch den anisotropen
Messwertgeber (103) verändert werden und die veränderten Radiowellen von den
polarisationsempfindlichen Empfängern (104,105,106) empfangen werden,
- wobei Einrichtungen vorgesehen sind, die konfiguriert sind, aus den Signalen der polarisationsempfindlichen Empfänger (104,105,106) eine Aussage über die Polarisation der empfangenen Radiowellen zu treffen.

2. Vorrichtung nach Anspruch 1, **dadurch gekennzeichnet, dass** der Sender (100,101) derart konfiguriert ist, dass die vom Sender (100,101) ausgehenden Radiowellen (102) linear polarisiert sind.

3. Vorrichtung nach Anspruch 1, **dadurch gekennzeichnet, dass** der Sender (100,101) derart konfiguriert ist, dass die vom Sender (100,101) ausgehenden Radiowellen (102) im zeitlichen Mittel unpolarisiert oder zirkular polarisiert sind.

4. Vorrichtung nach einem der vorangehenden Ansprüche, **dadurch gekennzeichnet, dass** der anisotrope Messwertgeber (103) für die vom Sender (100,101) gesendeten Radiowellen (103) für unterschiedliche Polarisation unterschiedlich durchlässig ist und die polarisationsempfindlichen Empfänger (104,105,106) derart konfiguriert sind, dass sie die vom anisotropen Messwertgeber (103) durchgelassenen Radiowellen empfangen können.

5. Vorrichtung nach einem der vorangehenden Ansprüche, **dadurch gekennzeichnet, dass** der anisotrope Messwertgeber (103) derart konfiguriert ist, dass er vom Sender (100,101) gesendete Radiowellen (102) für unterschiedliche Polarisation unterschiedlich stark reflektiert und die polarisationsempfindlichen Empfänger (104,105,106) derart konfiguriert sind, dass sie die vom anisotropen Messwertgeber (103) reflektierten Radiowellen empfangen können.

6. Vorrichtung nach einem der vorangehenden Ansprüche, **dadurch gekennzeichnet, dass** der anisotrope Messwertgeber (103) von der übrigen Vorrichtung baulich getrennt ist.

7. Vorrichtung nach einem der vorangehenden Ansprüche, **dadurch gekennzeichnet, dass** Sender (100,101) und Empfänger (104,105,106) von Radiowellen integriert sind.

8. Vorrichtung nach einem der vorangehenden Ansprüche, **dadurch gekennzeichnet, dass** Sender (100,101) und Empfänger (104,105,106) zusammen mit Einrichtungen zur Ansteuerung eines Aktuators und zum Vergleich der gemessenen Polarisation der empfangenen Radiowellen mit einer Sollgröße zusammenwirkend angeordnet sind.

9. Vorrichtung nach einem der vorangehenden Ansprüche, **dadurch gekennzeichnet, dass**
- der anisotrope Messwertgeber (103) eine strukturelle Asymmetrie aufweist,
- die Empfänger der Radiowellen (104,105,106) geeignet sind, die strukturelle Asymmetrie zu messen,
- wobei die strukturelle Asymmetrie so konfiguriert ist, dass
der Drehwinkel des anisotropen Messwertgebers (103) in einem 360°-Intervall aus der
Kombination aller gemessenen Signale der Vorrichtung eindeutig messbar ist.

10. Vorrichtung nach einem der Ansprüche 1 bis 8, **dadurch gekennzeichnet, dass**
- der anisotrope Messwertgeber (103) eine strukturelle Asymmetrie aufweist,
- mindestens eine weitere sensorische Komponente zur Messung der strukturellen
Asymmetrie vorhanden ist,
- wobei die strukturelle Asymmetrie so konfiguriert ist, dass
der Drehwinkel des anisotropen Messwertgebers (103) in einem 360°-Intervall aus der
Kombination aller gemessenen Signale der Vorrichtung eindeutig messbar ist.

11. Vorrichtung nach einem der vorangehenden Ansprüche, **dadurch gekennzeichnet, dass** der anisotrope Messwertgeber (103) so geformt ist, dass Mehrfachreflexionen an den Empfängern (104,105,106) abgeschwächt sind.

12. Vorrichtung zur Messung von Drehwinkel oder Drehgeschwindigkeit mit einem konfigurierbaren Sende-Empfänger für polarisierte Radiowellen,
- mit einer Antenne (601) für polarisierte Radiowellen,
- mit einem Sendeverstärker (600),
- mit einem Empfangsverstärker (600),
- mit einem für die gesendeten Radiowellen anisotropen Messwertgeber (602),
- wobei der anisotrope Messwertgeber (602) gegenüber dem Sende-Empfänger 600) um eine
Drehachse drehbar ist,
- wobei Sende- und Empfangsverstärker (600) gemeinsam benutzte
Schaltungskomponenten aufweisen,
- wobei die vom Sende-Empfänger (600) gesendeten Radiowellen durch den anisotropen
Messwertgeber (602) verändert werden und die veränderten Radiowellen von derselben
Antenne (601) empfangen werden,
- wobei Einrichtungen vorgesehen sind, die konfiguriert sind, aus den Signalen der polarisationsempfindlichen Empfänger (104,105,106) eine Aussage über die Polarisation der empfangenen Radiowellen zu treffen.

13. Verwendung der Vorrichtung nach einem der Ansprüche 1 bis 12 zur Messung eines Drehwinkels oder einer Drehgeschwindigkeit des Messwertgebers (103).

14. Verwendung der Vorrichtung nach einem der Ansprüche 1 bis 12 zur Messung eines Drehwinkels oder einer Drehgeschwindigkeit des Messwertgebers (103) mit mehreren lateral verteilten Vorrichtungen nach einem der Ansprüche 1 bis 13, die an verschiedenen Stellen auf dem gemeinsam genutzten Messwertgeber (103) messen.

15. Verwendung der Vorrichtung nach einem der Ansprüche 1 bis 12 zur Messung eines Drehwinkels, einer Drehgeschwindigkeit oder einer Verschiebung am Umfang einer Struktur, wobei der Umfang der Struktur die Merkmale des anisotropen Messwertgebers (103) nach einem der Ansprüche 1 bis 13 aufweist.

## Claims

1. A device for measuring the angle of rotation or speed of rotation having
- at least one transmitter (100, 101) of radio waves (102),
- at least two receivers (104, 105, 106) for radio waves,
- an anisotropic detector (103) for the radio waves emitted by the transmitter,
- wherein the anisotropic detector (103) can be rotated in respect of the receivers (104, 105) about an axis of rotation,
- wherein the receivers (104, 105, 106) are polarization-sensitive,
- wherein the radio waves (102) emitted by the transmitter (100, 101) are modified by the anisotropic detector (103) and the modified radio waves are received by the polarization-sensitive receivers (104, 105, 106),
- wherein mechanisms are provided which are configured to draw conclusions on the polarization of the radio waves received from the signals of the polarization-sensitive receivers (104, 105, 106).

2. The device according to claim 1, **characterized in that** the transmitter (100, 101) is configured in such a manner that the radio waves (102) emitted by the transmitter (100, 101) are polarized linearly.

3. The device according to claim 1, **characterized in that** the transmitter (100, 101) is configured in such a manner that the radio waves (102) emitted by the transmitter (100, 101) are unpolarised or circularly polarized in the timing means.

4. The device according to one of the preceding claims, **characterized in that** the anisotropic detector (103) for the radio waves (103) transmitted by the transmitter (100, 101) is differently permeable for different polarization and the polarization-sensitive receivers (104, 105, 106) are configured in such a manner that they can receive the radio waves allowed through by the anisotropic detector (103).

5. The device according to one of the preceding claims, **characterized in that** the anisotropic detector (103) is configured in such a manner that it reflects radio waves (102) transmitted by the transmitter (100, 101) to a different degree for different polarization and the polarization-sensitive receivers (104, 105, 106) are configured in such a manner that they can receive the radio waves reflected by the anisotropic detector (103).

6. The device according to one of the preceding claims, **characterized in that** the anisotropic detector (103) is structurally separate from the remainder of the device.

7. The device according to one of the preceding claims, **characterized in that** transmitters (100, 101) and receivers (104, 105, 106) of radio waves are integrated.

8. The device according to one of the preceding claims, **characterized in that** transmitters (100, 101) and receivers (104, 105, 106) along with mechanisms for controlling an actuator and comparing the measured polarization of the received radio waves with a target variable are arranged in an interacting manner.

9. The device according to one of the preceding claims, **characterized in that**
- the anisotropic detector (103) exhibits structural asymmetry,
- the receivers of the radio waves (104, 105, 106) are suitable for measuring the structural asymmetry,
- wherein the structural asymmetry is configured in such a manner that the angle of rotation of the anisotropic detector (103) is clearly measurable over a 360° interval from the combination of all measured signals of the device.

10. The device according to one of claims 1 to 8, **characterized in that**
- the anisotropic detector (103) exhibits structural asymmetry,
- at least one further sensory component is present for measuring the structural asymmetry,
- wherein the structural asymmetry is configured in such a manner that the angle of rotation of the anisotropic detector (103) is clearly measurable over a 360 ° interval from the combination of all measured signals of the device.

11. The device according to one of the preceding claims, **characterized in that** the anisotropic detector (103) is formed in such a manner that multiple reflections on the receivers (104, 105, 106) are attenuated.

12. A device for measuring the angle of rotation or speed of rotation with a configurable transceiver for polarized radio waves,
- having an antenna (601) for polarized radio waves,
- having a transmission amplifier (600),
- having a receiving amplifier (600),
- having an anisotropic detector (602) for the transmitted radio waves,
- wherein the anisotropic detector (602) can be rotated in respect of the transceiver (600) about an axis of rotation,
- wherein transmitter and receiver amplifiers (600) exhibit jointly used circuit components,
- wherein the radio waves transmitted by the transceiver (600) are modified by the anisotropic detector (602) and the modified radio waves are received from the same antenna (601),
- wherein mechanisms are provided which are configured to draw conclusions from the signals from the polarization-sensitive receivers (104, 105, 106) regarding the polarization of the received radio waves.

13. Use of the device according to one of claims 1 to 12 for measuring an angle of rotation or a speed of rotation of the detector (103).

14. Use of the device according to one of claims 1 to 12 for measuring an angle of rotation or a speed of rotation of the detector (103) with a plurality of laterally distributed devices according to one of claims 1 to 13 which measure at various points on the jointly used detector (103).

15. Use of the device according to one of claims 1 to 12 for measuring an angle of rotation, a speed of rotation or a displacement at the periphery of a structure, wherein the periphery of the structure exhibits the features of the anisotropic detector (103) according to one of claims 1 to 13.

## Revendications

1. Dispositif destiné à mesurer un angle de rotation ou une vitesse de rotation, avec
- au moins un émetteur (100, 101) d'ondes radio (102),
- au moins deux récepteurs (104, 105, 106) d'ondes radio,
- un transducteur (103) anisotrope pour les ondes radio partant de l'émetteur,
- le transducteur (103) anisotrope étant rotatif autour d'un axe de rotation, par rapport aux récepteurs (104, 105),
- les récepteurs (104, 105, 106) étant sensibles à la polarisation,
- les ondes radio (102) partant du récepteur (100, 101) étant modifiées par le transducteur (103) anisotrope et les ondes radio modifiées étant réceptionnées par les récepteurs (104, 105, 106) sensibles à la polarisation,
- des systèmes étant prévus qui sont configurés pour tirer des signaux des récepteurs (104, 105, 106) sensibles à la polarisation une information sur la polarisation des ondes radio réceptionnées.

2. Dispositif selon la revendication 1, **caractérisé en ce que** l'émetteur (100, 101) est configuré de sorte que les ondes radio (102) partant de l'émetteur (100, 101) soient polarisées de manière linéaire.

3. Dispositif selon la revendication 1, **caractérisé en ce que** l'émetteur (100, 101) est configuré de sorte que les ondes radio (102) partant de l'émetteur (100, 101) soient non polarisées en moyenne dans le temps ou soient polarisées de manière circulaire.

4. Dispositif selon l'une quelconque des revendications précédentes, **caractérisé en ce que** le transducteur (103) anisotrope pour les ondes radio (103) émises par l'émetteur (100, 101) est différemment perméable pour différentes polarisations et **en ce que** les récepteurs (104, 105, 106) sensibles à la polarisation sont configurés de sorte à pouvoir réceptionner les ondes radio que le transducteur (103) anisotrope a laissé passer.

5. Dispositif selon l'une quelconque des revendications précédentes, **caractérisé en ce que** le transducteur (103) anisotrope est configuré de sorte à réfléchir avec différentes forces des ondes radio (102) émises par l'émetteur (100, 101) pour une polarisation différente et les récepteurs (104, 105, 106) sensibles à la polarisation sont configurés de sorte à pouvoir réceptionner les ondes radio réfléchies par le transducteur (103) anisotrope.

6. Dispositif selon l'une quelconque des revendications précédentes, **caractérisé en ce que** le transducteur (103) anisotrope est constructivement séparé des autres dispositifs.

7. Dispositif selon l'une quelconque des revendications précédentes, **caractérisé en ce que** les émetteurs (100, 101) et les récepteurs (104, 105, 106) d'ondes radio sont intégrés.

8. Dispositif selon l'une quelconque des revendications précédentes, **caractérisé en ce que** les émetteurs (100, 101) et les récepteurs (104, 105, 106) sont placées en coopération en commun avec des systèmes pour l'amorçage d'un actionneur et pour la comparaison de la polarisation mesurée des ondes radio réceptionnées avec une grandeur de consigne.

9. Dispositif selon l'une quelconque des revendications précédentes, **caractérisé en ce que**
- le transducteur (103) anisotrope présente une asymétrie structurelle,
- les récepteurs des ondes radio (104, 105, 106) sont adaptés pour mesurer l'asymétrie structurelle,
- l'asymétrie structurelle est configurée de telle sorte que l'angle de rotation du transducteur (103) anisotrope soit clairement mesurable dans un intervalle de 360° à partir de l'association de tous les signaux mesurés du dispositif.

10. Dispositif selon l'une quelconque des revendications 1 à 8, **caractérisé en ce que**
- le transducteur (103) anisotrope présente une asymétrie structurelle,
- au moins un composant sensoriel supplémentaire pour la mesure de l'asymétrie structurelle est présent,
- l'asymétrie structurelle étant configurée de telle sorte que l'angle de rotation du transducteur (103) anisotrope est clairement mesurable dans un intervalle de 360° à partir de l'association de tous les signaux mesurés du dispositif.

11. Dispositif selon l'une quelconque des revendications précédentes, **caractérisé en ce que** le transducteur (103) anisotrope est formé de telle sorte que des réflexions multiples soient atténuées sur les récepteurs (104, 105, 106).

12. Dispositif destiné à mesuré des angles de rotation ou des vitesses de rotation avec un émetteur-récepteur configurable pour des ondes radio polarisées,
- avec une antenne (601) pour des ondes radio polarisées,
- avec un amplificateur d'émission (600),
- avec un amplificateur de réception (600),
- avec un transducteur (602) anisotrope pour les ondes radio émises,
- le transducteur (602) anisotrope étant rotatif par rapport à l'émetteur-récepteur (600) autour d'un axe de rotation,
- l'amplificateur (600) d'émission et de réception comportant des composants de circuit utilisés en commun,
- les ondes radio émises par l'émetteur-récepteur (600) étant modifiées par le transducteur (602) anisotrope et les ondes radio modifiées étant réceptionnées par la même antenne (601),
- des systèmes étant prévus, qui sont configurés pour tirer à partir des signaux des récepteurs (104, 105, 106) sensibles à la polarisation une information concernant la polarisation des ondes radio réceptionnées.

13. Utilisation du dispositif selon l'une quelconque des revendications 1 à 12 pour la mesure d'un angle de rotation ou d'une vitesse de rotation du transducteur (103).

14. Utilisation du dispositif selon l'une quelconque des revendications 1 à 12 pour la mesure d'un angle de rotation ou d'une vitesse de rotation du transducteur (103), avec plusieurs dispositifs selon l'une quelconque des revendications 1 à 13 distribués latéralement, qui mesurent en différents endroits sur le transducteur (103) utilisé en commun.

15. Utilisation du dispositif selon l'une quelconque des revendications 1 à 12 pour la mesure d'un angle de rotation, d'une vitesse de rotation ou d'un déplacement sur la périphérie d'une structure, la périphérie de la structure comportant les caractéristiques du transducteur (103) anisotrope selon l'une quelconque des revendications 1 à 13.
